# EUROPEAN PATENT SPECIFICATION

(11) **EP 2 714 225 B1**
(45) Date of publication and mention of the grant of the patent: **11.11.2020**
(21) Application number: 12792769.7
(22) Date of filing: 31.05.2012
(51) Int. Cl.: B01D 15/32, B01D 15/36, B01D 15/38

(54) **METHOD OF SEPARATION OF LIPID AND BIOLOGICAL MOLECULAR SPECIES USING HIGH PURITY CHROMATOGRAPHIC MATERIALS**
VERFAHREN ZUR TRENNUNG VON LIPIDEN UND MOLEKULAREN BIOLOGISCHEN SPEZIES MITHILFE HOCHREINER CHROMATOGRAPHIEMATERIALIEN
PROCÉDÉ DE SÉPARATION D'ESPÈCES MOLÉCULAIRES LIPIDIQUES ET BIOLOGIQUES À L'AIDE DE MATIÈRES CHROMATOGRAPHIQUES DE GRANDE PURETÉ

(30) Priority: 03.06.2011 US 201161493177 P
(43) Date of publication of application: 09.04.2014
(73) Proprietor: Waters Technologies Corporation, Milford, MA 01757 (US)
(72) Inventor: ISAAC, Giorgis, Marlborough, MA 01752 (US); MCDONALD, Stephen, Salem, MA 01970 (US); MILLAR, Alan, Southborough, MA 01772 (US); FOUNTAIN, Kenneth, Worcester, MA 01604 (US); SHOCKCOR, John, Milford, MA 01757 (US)
(74) Representative: Forresters IP LLP
(86) International application number: PCT/US2012/040205
(87) International publication number: WO 2012/166916

(56) References cited:
- WO-A1-2011/017418
- WO-A1-2011/017418
- John E Shockcor ET AL: "Analysis of Intact Lipids from Biologics Matrices by UPLC/High Definition MS", , 1 February 2010 (2010-02-01), XP055146369, Retrieved from the Internet: URL:http://www.waters.com/webassets/cms/li brary/docs/720003349en.pdf [retrieved on 2014-10-14]
- DETTMER ET AL.: 'MASS SPECTROMETRY-BASED METABOLOMICS' MASS SPECTROM. REV vol. 26, no. 1, 2007, pages 51 - 78, XP002485404

## Description

### BACKGROUND OF THE INVENTION

### Chromatographic Materials

Packing materials for liquid chromatography (LC) are generally classified into two types: organic materials, e.g., polydivinylbenzene, and inorganic materials typified by silica. Many organic materials are chemically stable against strongly alkaline and strongly acidic mobile phases, allowing flexibility in the choice of mobile phase pH. However, organic chromatographic materials generally result in columns with low efficiency, particularly with low molecular-weight analytes. Many organic chromatographic materials not only lack the mechanical strength of typical chromatographic silica but also shrink and swell when the composition of the mobile phase is changed.

Silica is the material most widely used in High Performance Liquid Chromatography (HPLC), Ultra Performance Liquid Chromatography (UPLC), and Supercritical Fluid Chromatography (SFC). The most common applications employ silica that has been surface-5 derivatized with an organic functional group such as octadecyl (Cl 8), octyl (C8), phenyl, amino, cyano, etc. As stationary phases for HPLC, these packing materials result in columns that have high efficiency and do not show evidence of shrinking or swelling.

Current Hybrid Material Technologies (HMT) provide important solutions to traditional chromatographic problems experienced with silica based packing materials. HMT improvements include dramatically improved high and excellent low pH stability, great mechanical stability, good peak shape when used at pH 7, high efficiency, good retentivity, and desirable chromatographic selectivity.

### Biological Molecular Species

Currently methods for mass spectrometric separation and analysis of biological molecular species are diverse in terms of sample introduction and detection. Lipids, for example, that are both the building blocks and main repository of energy in cell membranes, have generally been subject to global lipid profiling techniques such as direct infusion. The direct infusion method has prevailed historically due to the apparent simplicity and application to a wide range of lipid species. Similar considerations have also lead to nominal mass instruments being the preferred detection platform for lipid interrogation.

However, issues such as ion suppression from high abundant lipid species and the need for detection and quantification of low abundant and isobaric species remain, particularly when analyzing a complex biological sample. Thus, there remains a need for alternative techniques that provide superior peak shape, increased sensitivity, and increased peak capacity when analyzing complex biological samples.

Known arrangements are disclosed in the following documents:
John E Shockcor ET AL: "Analysis of Intact Lipids from Biologics Matrices by UPLC/High Definition MS", 1 February 2010 (2010-02-01), XP055146369; and
WO2011/017418.

### SUMMARY OF THE INVENTION

The present invention is defined by the attached claims.

The present invention provides methods of manipulating, for example, separating, analyzing, extracting, concentrating or profiling, molecular species contained within a biological sample using a high purity chromatographic material (HPCM) comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In one aspect, the invention provides an analytical method of separating components of a biological sample comprising a step of contacting said biological sample with a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In another aspect, the invention provides an analytical method of separating components of a biological sample comprising a step of contacting said biological sample with a column chromatography device comprising
a) a column having a cylindrical interior for accepting a stationary phase; and
b) an immobilized stationary phase within said column, wherein said immobilized stationary phase comprises a high purity chromatographic material comprising a chromatographic surface
wherein the chromatographic surface comprises a hydrophobic surface group and one or more ionizable modifiers with the proviso that when the ionizable modifier does not contain a Zwitterion, the ionizable modifier does not contain a quaternary ammonium ion moiety. In still another aspect, the invention provides a method of analyzing components of a biological sample comprising a step of contacting said biological sample with a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In still another aspect, the invention provides a method of analyzing components of a biological sample comprising a step of contacting said biological sample with a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In yet another aspect, the invention provides an method of analyzing components of a biological sample comprising a step of contacting said biological sample with a column chromatography device comprising
a) a column having a cylindrical interior for accepting a stationary phase; and
b) an immobilized stationary phase within said column, wherein said immobilized stationary phase comprises a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In another aspect, the invention provides a method of extracting components of a biological sample comprising a step of contacting said biological sample with a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In still other aspects, the invention provides a method of extracting components of a biological sample comprising a step of contacting said biological sample with a column chromatography device comprising
a) a column having a cylindrical interior for accepting a stationary phase; and
b) an immobilized stationary phase within said column, wherein said immobilized stationary phase comprises a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In another aspect, the invention provides an method of concentrating components of a biological sample comprising a step of contacting said biological sample with a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In still another aspect, the invention provides a method of concentrating components of a biological sample comprising a step of contacting said biological sample with a column chromatography device comprising
a) a column having a cylindrical interior for accepting a stationary phase; and
b) an immobilized stationary phase within said column, wherein said immobilized stationary phase comprises a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In yet another aspect, the invention provides a method of profiling the components of a biological sample comprising a step of contacting said biological sample with a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In still yet another aspect the invention provides a method of profiling the components of a biological sample comprising a step of contacting said biological sample with a column chromatography device comprising
a) a column having a cylindrical interior for accepting a stationary phase; and
b) an immobilized stationary phase within said column, wherein said immobilized stationary phase comprises a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In certain aspects, the invention provides a method of separating, analyzing, concentrating or providing a biological sample which comprises one or more biological molecules. In some aspects, the biological sample comprises one or more lipids. In other aspects the biological sample is an inclusion body, a biological fluid, a biological tissue, a plant tissue, a biological matrix, an embedded tissue sample, one or more cells or a cell culture supernatant.

In other aspects, the invention provides a method of separating, analyzing, concentrating or providing a biological sample further comprising the step of identifying the components of the biological sample. Such idenfitication can be is achieved by mass spectrometry, MALDI-MS, ESI-MS, nuclear magnetic resonance, infrared analysis, flow injection analysis, capillary electrochromatography, ultraviolet detection or a compbination thereof. In certain aspects, the identification of the components is achieved by comparison of mass spectrometry peaks with known compounds in a computer database.

In certain aspects the HPCM utilized by the invention may further comprise a chromatographic core material. In some aspects, the chromatographic core is a silica material; a hybrid inorganic/organic material; a superficially porous material; or a superficially porous material.

In another aspect the ionizable modifier utilized in the HPCM contains a carboxylic acid group, a sulfonic acid group, a phosphoric acid group, a boronic acid group, an amino group, an imido group, an amido group, a pyridyl group, an imidazolyl group, an ureido group, a thionyl-ureido group or an aminosilane group.

In another aspect, the ionizable modifier utilized in the HPCM is selected from the group of zirconium, aluminum, cerium, iron, titanium, salts thereof, oxides and combinations thereof.

In another aspect, the ionizable modifier utilized in the HPCM may be obtained from an ionizable modifying reagent selected from groups having formula (I) 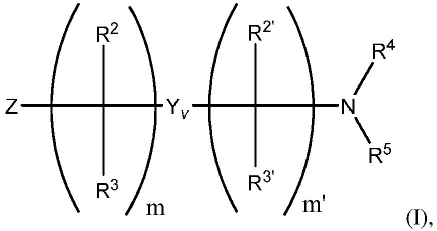 the formula (II): 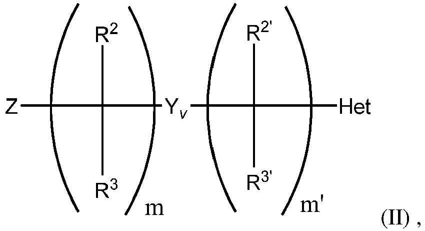 the formula (III): 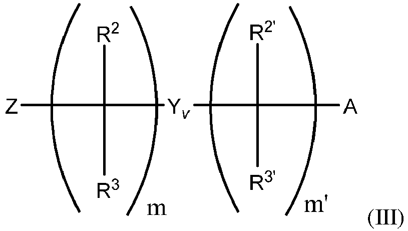 or a combination thereof
wherein
m is an integer from 1-8;
v is 0 or 1;
when v is 0, m' is 0;
when v is 1, m' is an integer from 1-8;
Z represents a chemically reactive group, including 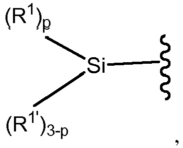 -OH, -OR⁶, amine, alkylamine, dialkylamine, isocyanate, acyl chloride, triflate, isocyanate, thiocyanate, imidazole carbonate, NHS-ester, carboxylic acid, ester, epoxide, alkyne, alkene, azide, -Br, -Cl, or -I;
Y is an embedded polar functionality;
each occurrence of R¹ independently represents a chemically reactive group on silicon, including (but not limited to) -H, -OH, -OR⁶, dialkylamine, triflate, Br, Cl, I, vinyl, alkene, or -(CH₂)_{m"}Q;
each occurrence of Q is -OH, -OR⁶, amine, alkylamine, dialkylamine, isocyanate, acyl chloride, triflate, isocyanate, thiocyanate, imidazole carbonate, NHS-ester, carboxylic acid, ester, epoxide, alkyne, alkene, azide, -Br, -Cl, or -I;
m" is an integer from 1-8
p is an integer from 1-3;
each occurrence of R^{1'} independently represents F, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl, fluoroalkyl, or fluoroaryl;
each occurrence of R², R² , R³ and R³ independently represents hydrogen, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl, -Z, or a group having the formula -Si(R')_{b}R"ₐ or - C(R')_{b}R"ₐ;
a and b each represents an integer from 0 to 3 provided that a + b = 3;
R' represents a C₁ - C₆ straight, cyclic or branched alkyl group;
R" is a functionalizing group selected from the group consisting of alkyl, alkenyl, alkynyl, aryl, cyano, amino, diol, nitro, ester, a cation or anion exchange group, an alkyl or aryl group containing an embedded polar functionality and a chiral moiety.
R⁴ represents hydrogen, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl;
R⁵ represents hydrogen, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl;
each occurrence of R⁶ independently represents C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl;
Het represents a heterocyclic or heteroaryl ring system comprising at least one nitrogen atom; and
A represents an acidic ionizable modifier moiety or a dual charge ionizable modifier moiety.

In yet other aspects, the ionizable modifying reagent utilized in the HPCM is aminopropyltriethoxysilane, aminopropyltrimethoxysilane, 2-(2-(trichlorosilyl)ethyl)pyridine, 2-(2-(trimethoxy)ethyl)pyridine, 2-(2-(triethoxy)ethyl)pyridine, 2-(4-pyridylethyl)triethoxysilane, 2-(4-pyridylethyl)trimethoxysilane, 2-(4-pyridylethyl)trichlorosilane, chloropropyltrimethoxysilane, chloropropyltrichlorosilane, chloropropyltrichlorosilane, chloropropyltriethoxysilane, imidazolylpropyltrimethoxysilane, imidazolylpropyltriethoxysilane, imidazolylpropyl trichlorosilane, sulfopropyltrisilanol, carboxyethylsilanetriol, 2-(carbomethoxy)ethylmethyldichlorosilane, 2-(carbomethoxy)ethyltrichlorosilane, 2-(carbomethoxy)ethyltrimethoxysilane, n-(trimethoxysilylpropyl)ethylenediamine triacetic acid, (2-diethylphosphatoethyl)triethoxysilane, 3-mercaptopropyltriethoxysilane, 3-mercaptopropyltrimethoxysilane, bis[3-(triethoxysilyl)propyl]disulfide, bis[3-(triethoxysilyl)propyl]tetrasulfide, 2,2-dimethoxy-1-thia-2-silacyclopentane, bis(trichlorosilylethyl)phenylsulfonyl chloride, 2-(chlorosulfonylphenyl)ethyltrichlorosilane, 2-(chlorosulfonylphenyl)ethyltrimethoxysilane, 2-(ethoxysulfonylphenyl)ethyltrimethoxysilane, 2-(ethoxysulfonylphenyl)ethyltrimethoxysilane, 2-(ethoxysulfonylphenyl)ethyltrichlorosilane, sulphonic acid phenethyltrisilanol, (triethoxysilyl ethyl)phenyl phosphonic acid diethyl ester, (trimethoxysilyl ethyl)phenyl phosphonic acid diethyl ester, (trichlorosilyl ethyl)phenyl phosphonic acid diethyl ester, phosphonic acid phenethyltrisilanol, N-(3-trimethoxysilylpropyl)pyrrole, N-(3-triethoxysilylpropyl)-4,5-dihydroimidazole, bis(methyldimethoxysilylpropyl)-N-methylamine, tris(triethoxysilylpropyl)amine, bis(3-trimethoxysilylpropyl)-N-methylamine, (N,N-diethyl-3-aminopropyl)trimethoxysilane, N-(hydroxyethyl)-N-methylaminopropyltrimethoxysilane, 3-(N,N-dimethylaminopropyl)trimethoxysilane, bis(2-hydroxyethyl)-3-aminopropyltriethoxysilane, N,N'-bis(hydroxyethyl)-N,N'-bis(trimethoxysilylpropyl)ethylenediamine, or N,N-dimethyl-3-aminopropylmethyldimethoxysilane.

In some aspects, the ratio of the hydrophobic surface group : ionizable modifier in the HPCM utilized by the invention is from about 2.5:1 to about 350:1; from about 3:1 to about 200:1; from about 4:1 to about 150:1; from about 4:1 to about 35:1; from about 5:1 to about 25:1; from about 5:1 to about 22:1; from about 20:1 to about 100:1; or from about 25:1 to about 100:1.

In other aspects, the concentration of ionizable modifier in the HPCM utilized by the invention is less than about 0.5 µmol/m²; less than about 0.4 µmol/m²; less than about 0.3 µmol/m²; from about 0.01 µmol/m² to about 0.5 µmol/m²; from about 0.01 µmol/m² to about 0.4 µmol/m²; or from about 0.03 µmol/m² to about 0.3 µmol/m².

In another aspect, the hydrophobic surface group of the HPCM utilized by the invention is a C₄ to C₃₀ bonded phase. In certain aspects, the hydrophobic surface group is a C₁₈ bonded phase. In other aspects, the hydrophobic surface group is an aromatic, phenylalkyl, fluoro-aromatic, phenylhexyl, pentafluorophenylalkyl or chiral bonded phase. In still other aspects, the hydrophobic surface group is an embedded polar bonded phase.

In certain aspects, the HPCM utilized by the invention may be in the form of a particle, a granular material, a monolith, a superficially porous material, a superficially porous particle, a superficially porous monolith, or a superficially porous layer for open tubular chromatography.

In certain aspects, the HPCM utilized by the invention may be in inorganic material (*e.g.,* silica, alumina, titania, zirconia), a hybrid organic/inorganic material, an inorganic material (*e.g.*, silica, alumina, titania, zirconia) with a hybrid surface layer, a hybrid material with an inorganic (*e.g.*, silica, alumina, titania, zirconia) surface layer, or a hybrid material with a different hybrid surface layer. In other aspects, the HPCM of the invention may have ordered pore structure, non-periodic pore structuring, non-crystalline or amorphous pore structuring or substantially disordered pore structuring.

In one aspect, the HPCM utilized by the invention does not have chromatographically enhancing pore geometry.

In another aspect, the HPCM utilized by the invention has chromatographically enhancing pore geometry.

In certain aspects, the HPCM utilized by the invention has a surface area of about 25 to 1100 m²/g; about 80 to 500 m²/g; or about 120 to 330 m²/g.

In other aspects, the HPCM utilized by the invention has a pore volume of about 0.15 to 1.5 cm³/g; or about 0.5 to 1.3 cm³/g.

In yet other aspects, the HPCM utilized by the invention has a micropore surface area of less than about 110 m²/g; less than about 105 m²/g; less than about 80 m²/g; or less than about 50 m²/g.

In still yet other aspects, the HPCM utilized by the invention has an average pore diameter of about 20 to 1500Å; about 50 to 1000Å; about 100 to 750Å; or about 110 to 500Å.

In still yet other aspects, when the HPCM utilized by the invention is in the form of a particle, the HPCM utilized by the invention has an average particle size of about 0.3-100 µm; about 0.5-20 µm; 0.8-10 µm; or about 1.0-3.5 µm.

In another aspect, the HPCM utilized by the invention is hydrolytically stable at a pH of about 1 to about 14; at a pH of about 10 to about 14; or at a pH of about 1 to about 5.

In still another aspect, the HPCM utilized by the invention has a quantified surface coverage ratio, B/A, from about 2.5 to about 300 wherein A represents the ionizable modifier and B represents the hydrophobic group. In certain aspects, the quantified surface coverage ratio, B/A, is from about 3 to about 200, from about 4 to about 35 or from about 5 to about 22.

In another aspect, the HPCM utilized by the invention may be surface modified. In certain aspects, the HPCM of the invention may be surface modified by coating with a polymer. In other aspects, the HPCM of the invention may be surface modified by coating with a polymer by a combination of organic group and silanol group modification; by a combination of organic group modification and coating with a polymer; or by a combination of silanol group modification and coating with a polymer. In other aspects, the HPCM of the invention may be material has been surface modified by a combination of organic group modification, silanol group modification and coating with a polymer. In still other aspects, the HPCM of the invention may be surface modified via formation of an organic covalent bond between the material's organic group and the modifying reagent.

In certain aspects, the HPCM utilized by the invention may further comprising a nanoparticle dispersed within the material. In aspects further comprising a nanoparticle, the nanoparticle may be a mixture of more than one nanoparticle. In some aspects comprising a nanoparticle, the nanoparticle is present in <20% by weight of the nanocomposite or in <5% by weight of the nanocomposite. In other aspects comprising a nanoparticle, the nanoparticle is crystalline or amorphous. In certain aspects, the nanoparticle is a substance which comprises one or more moieties selected from the group consisting of silicon carbide, aluminum, diamond, cerium, carbon black, carbon nanotubes, zirconium, barium, cerium, cobalt, copper, europium, gadolinium, iron, nickel, samarium, silicon, silver, titanium, zinc, boron, oxides thereof, and nitrides thereof. In certain other aspects, the nanoparticle is a substance which comprises one or more moieties selected from the group consisting of nano-diamonds, silicon carbide, titanium dioxide, cubic-boronitride. In another aspect, the nanoparticles are less than or equal to 200 nm in diameter; less than or equal to 100 nm in diameter; less than or equal to 50 nm in diameter; or less than or equal to 20 nm in diameter.

### BRIEF DESCRIPTION OF THE DRAWINGS

**Figure 1** depicts the result of a UPLC/MS^{E} screen of bovine total liver lipid extract in both positive mode (top) negative mode (bottom).
**Figure 2** depicts the reproducibility of chromatography for bovine total liver lipid extract analysis using the methods of the invenition. This gives an RSD value of < 0.136 (n=20).
**Figure 3** depicts the result of a UPLC/MS^{E} screen of rat plasma lipid extract in both positive mode (top) negative mode (bottom).
**Figure 4** depicts the enhancement of co-eluting chromatographic peaks using UPLC CSH coupled with Ion Mobility Separation .
**Figure 5** depicts lipid catergories and abbreviations of common lipids; classes marked with a square are included in the analysis of Example 2.
**Figure 6** depicts representative structures for major lipid categories.
**Figure 7** depicts the results of a separation of 67 standard lipids in a mixture using the methods of the invenition.
**Figure 8** depicts the results of a separation of total bovine lipid extract acquired in both positive and negative ionization modes using the methods of the invenition.
**Figure 9** depicts the results of a separation of total rat plasma lipid extract acquired in both positive and negative ionization modes using the methods of the invenition.
**Figure 10** depicts the separation of cis and trans isobaric phosphatidylglycerol using the methods of the invenition.
**Figure 11** depicts the reproducibility of chromatography for bovine total liver lipid extract analysis using the methods of the invenition. This gives an RSD value of < 0.136 (n=20).

### DETAILED DESCRIPTION OF THE INVENTION

The present invention provides methods of manipulating, for example, separating, analyzing, extracting, concentrating or profiling, molecular species contained contained within a biological sample using a high purity chromatographic material (HPCM). The present invention will be more fully illustrated by reference to the definitions set forth below.

### Definitions

The term "sample" refers to any solution of a molecule or mixture of molecules that comprises at least one biological molecule that is subjected to manipulation in accordance with the methods of the invention, including separating, analyzing, extracting, concentrating or profiling. Particular examples include, but are not limited to, biological samples including animal and plant samples. The sample may further include macromolecules, *e.g.,* substances, such as biopolymers, *e.g.,* proteins, *e.g.,* proteolytic proteins or lipophilic proteins, such as receptors and other membrane-bound proteins, and peptides. The sample may further include one or more lipid molecules.

The language "biological sample" refers to any solution or extract containing a molecule or mixture of molecules that comprises at least one biomolecule that is subjected to manipulation in accordance with the methods of the invention, including separating, analyzing, extracting, concentrating or profiling, that originated from a biological source. Biological samples are intended to include crude or purified, *e.g.,* isolated or commercially obtained, samples. Particular examples include, but are not limited to, inclusion bodies, biological fluids, biological tissues, plant tissues, biological matrices, embedded tissue samples, cells (*e.g.,* one or more types of cells), and cell culture supernatants

The language "biological matrices" is intended to include anything that a cell contains or makes, *e.g.,* bone, inclusion bodies, blood components, cells, *e.g.,* cell lysates, etc.

The language "biological fluid" as used herein is intended to include fluids that are obtained from a biological source. Exemplary biological fluids include, but are not limited to, blood, blood plasma, urine, spinal fluid, mucosal tissue secretions, tears, interstitial fluid, synovial fluid, semen, and breast milk.

The language "biological molecules" is intended to include all molecules that are found within a biological sample or which are produced by a natural biological process. In certain embodiments, the biological molecule is a lipid molecule. In other embodiments, the the biological molecule is an organic, non-proteinaceous molecule. In other embodiments, the the biological molecule is peptide or a protein or an amino acid.

The language "natural biological process" is intended to include a process that occurs naturally in the human body, which may or may not be functioning as it would be in a healthy person. In certain embodiments of the invention, the analysis of a product of a reaction associated with a natural biological process is used to determine whether the natural biological process is functioning properly. Moreover, the language natural biological process is not making a reference to the quality of the process that is occurring, but merely that the process occurs naturally in the human body.

The term "lipophilic protein" refers to proteins or peptides that are relatively hydrophobic. Particular examples include, without limitation, protein from myelin or central nervous system tissue and membrane-bound proteins such as receptors.

The term "lipid" refers to a broad group of naturally occurring molecules which includes, but is not limited to, fats, triglycerides, fatty acids, waxes, sterols, fat-soluble vitamins (such as vitamins A, D, E and K), monoglycerides, diglycerides, phospholipids, fatty acyls, glycerolipids, glycerophospholipids, sphingolipids, saccharolipids and polyketide, sterol lipids and prenol lipids. Examples of lipids which may be analyzed by the methods of the invention include, but are not limited to, eicosanoids, prostaglandins, leukotrienes, thromboxanes, wax esters, fatty acid thioester coenzyme A derivatives, fatty acid thioester ACP derivatives, fatty acid carnitines, N-acyl ethanolamines, diacylglycerides, triglycerides, monogalactosylmonoacylglycerols, digalactosyldiacylglycerols, seminolipid, all lysophospholipids, phosphatidylcholine, phosphatidylethanolamine, phosphatidylserine, phosphatidylglycerol, phosphotidylinositol, sphingomyelins, cardiolipins, ceramide phosphocholines, cholesterol, cholesterol esters, estrogen, testosterone, androsterone, progestogens, glucocorticoids, mineralocorticoids, secosteroids, bile acids, conjugates of bile acid phytosterols, β-sitosterol, stigmasterol, brassicasterol, ergosterol, polyterpenes, carotenoids, Vitamin E, vitamin K, ubiquinones, and mixtures thereof.

The term "receptor" is recognized in the art and refers generally to membrane-bound molecules, preferably proteins, which bind a ligand and transmit a signal into the cell. Such receptors usually have an extracellular domain, a transmembrane domain, and an intracellular domain.

The term "inclusion body" is recognized in the art and refers to an intracellular structure, preferably one containing an expressed protein.

The terms "analysis" or "analyzing" are used interchangeably and refer to any of the various methods of separating, detecting, isolating, purifying, solubilizing, detecting and/or characterizing biological molecules (*e.g.,* lipids). Examples include, but are not limited to, solid phase extraction, solid phase micro extraction, electrophoresis, mass spectrometry, *e.g.,* MALDI-MS or ESI, liquid chromatography, *e.g.,* high performance, *e.g.,* reverse phase, normal phase, or size exclusion, ion-pair liquid chromatography, liquid-liquid extraction, *e.g.,* accelerated fluid extraction, supercritical fluid extraction, microwave-assisted extraction, membrane extraction, soxhlet extraction, precipitation, clarification, electrochemical detection, staining, elemental analysis, Edmund degradation, nuclear magnetic resonance, infrared analysis, flow injection analysis, capillary electrochromatography, ultraviolet detection, and combinations thereof.

The term "profiling" refers to any of various methods of analysis which are used in combination to provide the content, composition, or characteristic ratio of biological molecules (e.g. , lipids) in a sample.

The term "electrophoresis" refers to any of the various methods of analyzing small molecules by their rate of movement in an electric field, i.e. based on the charge to mass ratio of the molecules. Examples include, but are not limited to, free zone electrophoresis and capillary electrophoresis.

The term "mass spectrometric detection" refers to any of the various methods of mass spectroscopy. Examples include, but are not limited to, electrospray ionization ("ESI"), surface desorption ionization techniques, and atmospheric pressure chemical ionization (APCI).

The language "surface desorption ionization" is intended to include mass spectrometry, such as matrix assisted laser desorption ionization (MALDI-MS), desorption ionization on silicon (DIOS), thermal desorption mass spectrometry, or surface enhanced laser desorption ionization (SELDI) where desorption ionization is accomplished on a surface, with or without a matrix assistance.

"High Purity" or "high purity chromatographic material (HPCM)" includes a material which is prepared from high purity precursors. In certain aspects, high purity materials have reduced metal contamination and/or non-diminished chromatographic properties including, but not limited to, the acidity of surface silanols and the heterogeneity of the surface. Exemplary HPCMs are disclosed in WO2011/017418, published February 10, 2011.

"Chromatographic surface" includes a surface which provides for chromatographic separation of a sample. In certain aspects, the chromatographic surface is porous. In some aspects, a chromatographic surface may be the surface of a particle, a superficially porous material or a monolith. In certain aspects, the chromatographic surface is composed of the surface of one or more particles, superficially porous materials or monoliths used in combination during a chromatographic separation. In certain other aspects, the chromatographic surface is non-porous.

"Ionizable modifier" includes a functional group which bears an electron donating or electron withdrawing group. In certain aspects, the ionizable modifier contains one or more carboxylic acid groups, amino groups, imido groups, amido groups, pyridyl groups, imidazolyl groups, ureido groups, thionyl-ureido groups or aminosilane groups, or a combination thereof. In other aspects, the ionizable modifier contains a group bearing a nitrogen or phosphorous atom having a free electron lone pair. In certain aspects, the ionizable modifier is convalently attached to the material surface and has an ionizable group. In some instances it is a attached to the chromatographic material by chemical modification of a surface hybrid group.

"Hydrophobic surface group" includes a surface group on the chrmoatographic surface which exhibits hydrophobicity. In certain aspects, a hydrophobic group can be a carbon bonded phase such as a C4 to C18 bonded phase. In other aspects, a hydrophobic surface group can contain an embedded polar group such that the external portion of the hydrophobic surface maintains hydrophobicity. In some instances it is a attached to the chromatographic material by chemical modification of a surface hybrid group. In other instances the hydrophobic group can be C4-C30, embedded polar, chiral, phenylalkyl, or pentafluorophenyl bonding and coatings.

"Chromatographic core" includes a chromatographic materials, including but not limited to an organic material such as silica or a hybrid material, as defined herein, in the form of a particle, a monolith or another suitable structure which forms an internal portion of the materials of the invention. In certain aspects, the surface of the chromatographic core represents the chromatographic surface, as defined herein, or represents a material encased by a chromatographic surface, as defined herein. The chromatographic surface material may be disposed on or bonded to or annealed to the chromatographic core in such a way that a discrete or distinct transition is discernable or may be bound to the chromatographic core in such a way as to blend with the surface of the chromatographic core resulting in a gradation of materials and no discrete internal core surface. In certain embodiments, the chromatographic surface material may be the same or different from the material of the chromatographic core and may exhibit different physical or physiochemical properties from the chromatographic core, including, but not limited to, pore volume, surface area, average pore diameter, carbon content or hydrolytic pH stability

"Hybrid", including "hybrid inorganic/organic material," includes inorganic-based structures wherein an organic functionality is integral to both the internal or "skeletal" inorganic structure as well as the hybrid material surface. The inorganic portion of the hybrid material may be, *e.g.,* alumina, silica, titanium, cerium, or zirconium or oxides thereof, or ceramic material. "Hybrid" includes inorganic-based structures wherein an organic functionality is integral to both the internal or "skeletal" inorganic structure as well as the hybrid material surface. As noted above, exemplary hybrid materials are shown in U.S. Patent Nos. 4,017,528, 6,528,167, 6,686,035 and 7,175,913.

The term "alicyclic group" includes closed ring structures of three or more carbon atoms. Alicyclic groups include cycloparaffins or naphthenes which are saturated cyclic hydrocarbons, cycloolefins, which are unsaturated with two or more double bonds, and cycloacetylenes which have a triple bond. They do not include aromatic groups. Examples of cycloparaffins include cyclopropane, cyclohexane and cyclopentane. Examples of cycloolefins include cyclopentadiene and cyclooctatetraene. Alicyclic groups also include fused ring structures and substituted alicyclic groups such as alkyl substituted alicyclic groups. In the instance of the alicyclics such substituents can further comprise a lower alkyl, a lower alkenyl, a lower alkoxy, a lower alkylthio, a lower alkylamino, a lower alkylcarboxyl, a nitro, a hydroxyl, -CF3, -CN, or the like.

The term "aliphatic group" includes organic compounds characterized by straight or branched chains, typically having between 1 and 22 carbon atoms. Aliphatic groups include alkyl groups, alkenyl groups and alkynyl groups. In complex structures, the chains can be branched or cross-linked. Alkyl groups include saturated hydrocarbons having one or more carbon atoms, including straight-chain alkyl groups and branched-chain alkyl groups. Such hydrocarbon moieties may be substituted on one or more carbons with, for example, a halogen, a hydroxyl, a thiol, an amino, an alkoxy, an alkylcarboxy, an alkylthio, or a nitro group. Unless the number of carbons is otherwise specified, "lower aliphatic" as used herein means an aliphatic group, as defined above (*e.g.,* lower alkyl, lower alkenyl, lower alkynyl), but having from one to six carbon atoms. Representative of such lower aliphatic groups, *e.g.,* lower alkyl groups, are methyl, ethyl, n-propyl, isopropyl, 2-chloropropyl, n-butyl, sec-butyl, 2-aminobutyl, isobutyl, tert-butyl, 3-thiopentyl and the like. As used herein, the term "nitro" means -NO2; the term "halogen" designates -F, -Cl, -Br or -I; the term "thiol" means SH; and the term "hydroxyl" means -OH. Thus, the term "alkylamino" as used herein means an alkyl group, as defined above, having an amino group attached thereto. Suitable alkylamino groups include groups having 1 to about 12 carbon atoms, preferably from 1 to about 6 carbon atoms. The term "alkylthio" refers to an alkyl group, as defined above, having a sulfhydryl group attached thereto. Suitable alkylthio groups include groups having 1 to about 12 carbon atoms, preferably from 1 to about 6 carbon atoms. The term "alkylcarboxyl" as used herein means an alkyl group, as defined above, having a carboxyl group attached thereto. The term "alkoxy" as used herein means an alkyl group, as defined above, having an oxygen atom attached thereto. Representative alkoxy groups include groups having 1 to about 12 carbon atoms, preferably 1 to about 6 carbon atoms, *e.g.,* methoxy, ethoxy, propoxy, tert-butoxy and the like. The terms "alkenyl" and "alkynyl" refer to unsaturated aliphatic groups analogous to alkyls, but which contain at least one double or triple bond respectively. Suitable alkenyl and alkynyl groups include groups having 2 to about 12 carbon atoms, preferably from 1 to about 6 carbon atoms.

The term "alkyl" includes saturated aliphatic groups, including straight-chain alkyl groups, branched-chain alkyl groups, cycloalkyl (alicyclic) groups, alkyl substituted cycloalkyl groups and cycloalkyl substituted alkyl groups. In certain embodiments, a straight chain or branched chain alkyl has 30 or fewer carbon atoms in its backbone, *e.g.,* C1-C30 for straight chain or C3-C30 for branched chain. In certain embodiments, a straight chain or branched chain alkyl has 20 or fewer carbon atoms in its backbone , *e.g.,* C1-C20 for straight chain or C3-C20 for branched chain, and more preferably 18 or fewer. Likewise, preferred cycloalkyls have from 4-10 carbon atoms in their ring structure and more preferably have 4-7 carbon atoms in the ring structure. The term "lower alkyl" refers to alkyl groups having from 1 to 6 carbons in the chain and to cycloalkyls having from 3 to 6 carbons in the ring structure.

Moreover, the term "alkyl" (including "lower alkyl") as used throughout the specification and Claims includes both "unsubstituted alkyls" and "substituted alkyls", the latter of which refers to alkyl moieties having substituents replacing a hydrogen on one or more carbons of the hydrocarbon backbone. Such substituents can include, for example, halogen, hydroxyl, alkylcarbonyloxy, arylcarbonyloxy, alkoxycarbonyloxy, aryloxycarbonyloxy, carboxylate, alkylcarbonyl, alkoxycarbonyl, aminocarbonyl, alkylthiocarbonyl, alkoxyl, phosphate, phosphonato, phosphinato, cyano, amino (including alkyl amino, dialkylamino, arylamino, diarylamino and alkylarylamino), acylamino (including alkylcarbonylamino, arylcarbonylamino, carbamoyl and ureido), amidino, imino, sulfhydryl, alkylthio, arylthio, thiocarboxylate, sulfate, sulfonato, sulfamoyl, sulfonamido, nitro, trifluoromethyl, cyano, azido, heterocyclyl, aralkyl, or an aromatic or heteroaromatic moiety. It will be understood by those skilled in the art that the moieties substituted on the hydrocarbon chain can themselves be substituted, if appropriate. Cycloalkyls can be further substituted, *e.g.,* with the substituents described above. An "aralkyl" moiety is an alkyl substituted with an aryl, *e.g.,* having 1 to 3 separate or fused rings and from 6 to about 18 carbon ring atoms, *e.g.,* phenylmethyl (benzyl).

The term "amino," as used herein, refers to an unsubstituted or substituted moiety of the formula -NRaRb, in which Ra and Rb are each independently hydrogen, alkyl, aryl, or heterocyclyl, or Ra and Rb, taken together with the nitrogen atom to which they are attached, form a cyclic moiety having from 3 to 8 atoms in the ring. Thus, the term "amino" includes cyclic amino moieties such as piperidinyl or pyrrolidinyl groups, unless otherwise stated. An "amino-substituted amino group" refers to an amino group in which at least one of Ra and Rb, is further substituted with an amino group.

The term "aromatic group" includes unsaturated cyclic hydrocarbons containing one or more rings. Aromatic groups include 5- and 6-membered single-ring groups which may include from zero to four heteroatoms, for example, benzene, pyrrole, furan, thiophene, imidazole, oxazole, thiazole, triazole, pyrazole, pyridine, pyrazine, pyridazine and pyrimidine and the like. The aromatic ring may be substituted at one or more ring positions with, for example, a halogen, a lower alkyl, a lower alkenyl, a lower alkoxy, a lower alkylthio, a lower alkylamino, a lower alkylcarboxyl, a nitro, a hydroxyl, -CF3, -CN, or the like.

The term "aryl" includes 5- and 6-membered single-ring aromatic groups that may include from zero to four heteroatoms, for example, unsubstituted or substituted benzene, pyrrole, furan, thiophene, imidazole, oxazole, thiazole, triazole, pyrazole, pyridine, pyrazine, pyridazine and pyrimidine and the like. Aryl groups also include polycyclic fused aromatic groups such as naphthyl, quinolyl, indolyl and the like. The aromatic ring can be substituted at one or more ring positions with such substituents, e.g., as described above for alkyl groups. Suitable aryl groups include unsubstituted and substituted phenyl groups. The term "aryloxy" as used herein means an aryl group, as defined above, having an oxygen atom attached thereto. The term "aralkoxy" as used herein means an aralkyl group, as defined above, having an oxygen atom attached thereto. Suitable aralkoxy groups have 1 to 3 separate or fused rings and from 6 to about 18 carbon ring atoms, *e.g.,* O-benzyl.

The term "ceramic precursor" is intended include any compound that results in the formation of a ceramic material.

The term "chiral moiety" is intended to include any functionality that allows for chiral or stereoselective syntheses. Chiral moieties include, but are not limited to, substituent groups having at least one chiral center, natural and unnatural amino-acids, peptides and proteins, derivatized cellulose, macrocyclic antibiotics, cyclodextrins, crown ethers, and metal complexes.

The term "embedded polar functionality" is a functionality that provides an integral polar moiety such that the intereaction with basic samples due to shielding of the unracted silanol groups on the silica surface is reduced. Embedded polar functionalities include, but are not limited to carbonate, amide, urea, ether, thioether, sulfinyl, sulfoxide, sulfonyl, thiourea, thiocarbonate, thiocarbamate, ethylene glycol, heterocyclic, triazole functionalities or carbamate functionalities such as disclosed in U. S. Patent No. 5,374,755, and chiral moieties.

The language "chromatographically-enhancing pore geometry" includes the geometry of the pore configuration of the presently-disclosed materials, which has been found to enhance the chromatographic separation ability of the material, *e.g.,* as distinguished from other chromatographic media in the art. For example, a geometry can be formed, selected or constructed, and various properties and/or factors can be used to determine whether the chromatographic separations ability of the material has been "enhanced", *e.g.,* as compared to a geometry known or conventionally used in the art. Examples of these factors include high separation efficiency, longer column life and high mass transfer properties (as evidenced by, *e.g.,* reduced band spreading and good peak shape.) These properties can be measured or observed using art-recognized techniques. For example, the chromatographically-enhancing pore geometry of the present porous inorganic/organic hybrid materials is distinguished from the prior art materials by the absence of "ink bottle" or "shell shaped" pore geometry or morphology, both of which are undesirable because they, *e.g.,* reduce mass transfer rates, leading to lower efficiencies.

Chromatographically-enhancing pore geometry is found in hybrid materials containing only a small population of micropores. A small population of micropores is achieved in hybrid materials when all pores of a diameter of about < 34Å contribute less than about 110 m²/g to the specific surface area of the material. Hybrid materials with such a low micropore surface area (MSA) give chromatographic enhancements including high separation efficiency and good mass transfer properties (as evidenced by, *e.g.,* reduced band spreading and good peak shape). Micropore surface area (MSA) is defined as the surface area in pores with diameters less than or equal to 34Å, determined by multipoint nitrogen sorption analysis from the adsorption leg of the isotherm using the BJH method. As used herein, the acronyms "MSA" and "MPA" are used interchangeably to denote "micropore surface area".

The term "functionalizing group" includes organic functional groups which impart a certain chromatographic functionality to a chromatographic stationary phase.

The term "heterocyclic group" includes closed ring structures in which one or more of the atoms in the ring is an element other than carbon, for example, nitrogen, sulfur, or oxygen. Heterocyclic groups can be saturated or unsaturated and heterocyclic groups such as pyrrole and furan can have aromatic character. They include fused ring structures such as quinoline and isoquinoline. Other examples of heterocyclic groups include pyridine and purine. Heterocyclic groups can also be substituted at one or more constituent atoms with, for example, a halogen, a lower alkyl, a lower alkenyl, a lower alkoxy, a lower alkylthio, a lower alkylamino, a lower alkylcarboxyl, a nitro, a hydroxyl, -CF3, -CN, or the like. Suitable heteroaromatic and heteroalicyclic groups generally will have 1 to 3 separate or fused rings with 3 to about 8 members per ring and one or more N, O or S atoms, e.g. coumarinyl, quinolinyl, pyridyl, pyrazinyl, pyrimidyl, furyl, pyrrolyl, thienyl, thiazolyl, oxazolyl, imidazolyl, indolyl, benzofuranyl, benzothiazolyl, tetrahydrofuranyl, tetrahydropyranyl, piperidinyl, morpholino and pyrrolidinyl.

The term "metal oxide precursor" is intended include any compound that contains a metal and results in the formation of a metal oxide, *e.g.,* alumina, silica, titanium oxide, zirconium oxide.

The term "monolith" is intended to include a collection of individual particles packed into a bed formation, in which the shape and morphology of the individual particles are maintained. The particles are advantageously packed using a material that binds the particles together. Any number of binding materials that are well known in the art can be used such as, for example, linear or cross-linked polymers of divinylbenzene, methacrylate, urethanes, alkenes, alkynes, amines, amides, isocyanates, or epoxy groups, as well as condensation reactions of organoalkoxysilanes, tetraalkoxysilanes, polyorganoalkoxysiloxanes, polyethoxysiloxanes, and ceramic precursors. In certain embodiments, the term "monolith" also includes hybrid monoliths made by other methods, such as hybrid monoliths detailed in US Patent No. 7,250,214; hybrid monoliths prepared from the condensation of one or more monomers that contain 0-99 mole percent silica (e.g., SiO₂); hybrid monoliths prepared from coalesced porous inorganic/organic particles; hybrid monoliths that have a chromatographically-enhancing pore geometry; hybrid monoliths that do not have a chromatographically-enhancing pore geometry; hybrid monoliths that have ordered pore structure; hybrid monoliths that have non-periodic pore structure; hybrid monoliths that have non-crystalline or amorphous molecular ordering; hybrid monoliths that have crystalline domains or regions; hybrid monoliths with a variety of different macropore and mesopore properties; and hybrid monoliths in a variety of different aspect ratios. In certain embodiments, the term "monolith" also includes inorganic monoliths, such as those described in G. Guiochon / J. Chromatogr. A 1168 (2007) 101-168.

The term "nanoparticle" is a microscopic particle/grain or microscopic member of a powder/nanopowder with at least one dimension less than about 100 nm, *e.g.,* a diameter or particle thickness of less than about 100 nm (0.1 mm), which may be crystalline or noncrystalline. Nanoparticles have properties different from, and often superior to those of conventional bulk materials including, for example, greater strength, hardness, ductility, sinterability, and greater reactivity among others. Considerable scientific study continues to be devoted to determining the properties of nanomaterials, small amounts of which have been synthesized (mainly as nano-size powders) by a number of processes including colloidal precipitation, mechanical grinding, and gas-phase nucleation and growth. Extensive reviews have documented recent developments in nano-phase materials, and are incorporated herein by reference thereto: Gleiter, H. (1989) "Nano-crystalline materials," Prog. Mater. Sci. 33:223-315 and Siegel, R. W. (1993) "Synthesis and properties of nano-phase materials," Mater. Sci. Eng. A168:189-197. In certain embodiments, the nanoparticles comprise oxides or nitrides of the following: silicon carbide, aluminum, diamond, cerium, carbon black, carbon nanotubes, zirconium, barium, cerium, cobalt, copper, europium, gadolinium, iron, nickel, samarium, silicon, silver, titanium, zinc, boron, and mixtures thereof. In certain embodiments, the nanoparticles of the present invention are selected from diamonds, zirconium oxide (amorphous, monoclinic, tetragonal and cubic forms), titanium oxide (amorphous, anatase, brookite and rutile forms), aluminum (amorphous, alpha, and gamma forms), and boronitride (cubic form). In particular embodiments, the nanoparticles of the present invention are selected from nano-diamonds, silicon carbide, titanium dioxide (anatase form), cubic-boronitride, and any combination thereof. Moreover, in particular embodiments, the nanoparticles may be crystalline or amorphous. In particular embodiments, the nanoparticles are less than or equal to 100 mm in diameter, *e.g.,* less than or equal to 50 mm in diameter, *e.g.,* less than or equal to 20 mm in diameter.

Moreover, it should be understood that the nanoparticles that are characterized as dispersed within the composites of the invention are intended to describe exogenously added nanoparticles. This is in contrast to nanoparticles, or formations containing significant similarity with putative nanoparticles, that are capable of formation in situ, wherein, for example, macromolecular structures, such as particles, may comprise an aggregation of these endogenously created.

The term "substantially disordered" refers to a lack of pore ordering based on x-ray powder diffraction analysis. Specifically, "substantially disordered" is defined by the lack of a peak at a diffraction angle that corresponds to a d value (or d-spacing) of at least 1 nm in an x-ray diffraction pattern.

"Surface modifiers" include (typically) organic functional groups which impart a certain chromatographic functionality to a chromatographic stationary phase. The porous inorganic/organic hybrid materials possess both organic groups and silanol groups which may additionally be substituted or derivatized with a surface modifier.

The language "surface modified" is used herein to describe the composite material of the present invention that possess both organic groups and silanol groups which may additionally be substituted or derivatized with a surface modifier. "Surface modifiers" include (typically) organic functional groups which impart a certain chromatographic functionality to a chromatographic stationary phase. Surface modifiers such as disclosed herein are attached to the base material, *e.g.,* via derivatization or coating and later crosslinking, imparting the chemical character of the surface modifier to the base material. In one embodiment, the organic groups of a hybrid material, react to form an organic covalent bond with a surface modifier. The modifiers can form an organic covalent bond to the material's organic group via a number of mechanisms well known in organic and polymer chemistry including but not limited to nucleophilic, electrophilic, cycloaddition, free-radical, carbene, nitrene, and carbocation reactions. Organic covalent bonds are defined to involve the formation of a covalent bond between the common elements of organic chemistry including but not limited to hydrogen, boron, carbon, nitrogen, oxygen, silicon, phosphorus, sulfur, and the halogens. In addition, carbon-silicon and carbon-oxygen-silicon bonds are defined as organic covalent bonds, whereas silicon-oxygen-silicon bonds that are not defined as organic covalent bonds. A variety of synthetic transformations are well known in the literature, *see, e.g.,* March, J. Advanced Organic Chemistry, 3rd Edition, Wiley, New York, 1985*.*

### Separation, Analysis and Profiling of Biological Samples

The present invention is useful for the analysis, separation, isolation, purification, detection and/or characterization of biological molecules from biological samples, such as biological fluids, biological tissues, biological matrices, embedded tissue samples, and cell culture supernatants.

In one aspect, the invention provides an analytical method of separating components of a biological sample comprising a step of contacting said biological sample with a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In another aspect, the invention provides an analytical method of separating components of a biological sample comprising a step of contacting said biological sample with a column chromatography device comprising
a) a column having a cylindrical interior for accepting a stationary phase; and
b) an immobilized stationary phase within said column, wherein said immobilized stationary phase comprises a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In still another aspect, the invention provides a method of analyzing components of a biological sample comprising a step of contacting said biological sample with a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In yet another aspect, the invention provides an method of analyzing components of a biological sample comprising a step of contacting said biological sample with a column chromatography device comprising
a) a column having a cylindrical interior for accepting a stationary phase; and
b) an immobilized stationary phase within said column, wherein said immobilized stationary phase comprises a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In another aspect, the invention provides a method of extracting components of a biological sample comprising a step of contacting said biological sample with a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In still other aspects, the invention provides a method of extracting components of a biological sample comprising a step of contacting said biological sample with a column chromatography device comprising
a) a column having a cylindrical interior for accepting a stationary phase; and
b) an immobilized stationary phase within said column, wherein said immobilized stationary phase comprises a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In another aspect, the invention provides an method of concentrating components of a biological sample comprising a step of contacting said biological sample with a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In still another aspect, the invention provides a method of concentrating components of a biological sample comprising a step of contacting said biological sample with a column chromatography device comprising
a) a column having a cylindrical interior for accepting a stationary phase; and
b) an immobilized stationary phase within said column, wherein said immobilized stationary phase comprises a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In yet another aspect, the invention provides a method of profiling the components of a biological sample comprising a step of contacting said biological sample with a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In still yet another aspect the invention provides a method of profiling the components of a biological sample comprising a step of contacting said biological sample with a column chromatography device comprising
a) a column having a cylindrical interior for accepting a stationary phase; and
b) an immobilized stationary phase within said column, wherein said immobilized stationary phase comprises a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In certain aspects, the invention provides a method of separating, analyzing, concentrating or providing a biological sample which comprises one or more biological molecules. In some aspects, the biological sample comprises one or more lipids. In other aspects the biological sample is an inclusion body, a biological fluid, a biological tissue, a plant tissue, a biological matrix, an embedded tissue sample, one or more cells or a cell culture supernatant.

In other aspects, the invention provides a method of separating, analyzing, concentrating or providing a biological sample further comprising the step of identifying the components of the biological sample. Such idenfitication can be is achieved by mass spectrometry, MALDI-MS, ESI-MS, nuclear magnetic resonance, infrared analysis, flow injection analysis, capillary electrochromatography, ultraviolet detection or a compbination thereof.

In certain embodiments, the biological sample may be concentrated, diluted, heated or cooled, prior to separation. In general, biological samples may be prepared by any standard means generally known in the art. For example, biological samples may be prepared, without limitation, by the methods disclosed in Bligh EG, Dyer WJ (August 1959). "A rapid method of total lipid extraction and purification". Can J Biochem Physiol 37 (8): 911-7. PMID 13671378; Krank J, Murphy RC, Barkley RM, Duchoslav E, McAnoy A (2007). "Qualitative analysis and quantitative assessment of changes in neutral glycerol lipid molecular species within cells". Meth. Enzymol. 432: 1-20; Ivanova PT, Milne SB, Byrne MO, Xiang Y, Brown HA (2007). "Glycerophospholipid identification and quantitation by electrospray ionization mass spectrometry". Meth. Enzymol. 432: 21-57; Deems R, Buczynski MW, Bowers-Gentry R, Harkewicz R, Dennis EA (2007). "Detection and quantitation of eicosanoids via high performance liquid chromatography-electrospray ionization-mass spectrometry". Meth. Enzymol. 432: 59-82; McDonald JG, Thompson BM, McCrum EC, Russell DW (2007). "Extraction and analysis of sterols in biological matrices by high performance liquid chromatography electrospray ionization mass spectrometry". Meth. Enzymol. 432: 145-70; Garrett TA, Guan Z, Raetz CR (2007). "Analysis of ubiquinones, dolichols, and dolichol diphosphate-oligosaccharides by liquid chromatography-electrospray ionization-mass spectrometry". Meth. Enzymol. 432: 117-43; Sullards MC, Allegood JC, Kelly S, Wang E, Haynes CA, Park H, Chen Y, Merrill AH (2007). "Structure-specific, quantitative methods for analysis of sphingolipids by liquid chromatography-tandem mass spectrometry: "inside-out" sphingolipidomics". Meth. Enzymol. 432: 83-115; or Å. Frostegård, A. Tunlid and E. Bååth (August 1991). "Microbial biomass measured as total lipid phosphate in soils of different organic content". J. of Microbiological Methods 14: 151-163.

Analysis of the sample may include, without limitation, solid phase extraction, solid phase micro extraction, electrophoresis, mass spectrometry, *e.g.,* MALDI-MS or ESI, liquid chromatography, *e.g.,* high performance, *e.g.,* reverse phase, normal phase, or size exclusion, ion-pair liquid chromatography, liquid-liquid extraction, *e.g.,* accelerated fluid extraction, supercritical fluid extraction, microwave-assisted extraction, membrane extraction, soxhlet extraction, precipitation, clarification, electrochemical detection, staining, elemental analysis, Edmund degradation, nuclear magnetic resonance, infrared analysis, flow injection analysis, capillary electrochromatography, ultraviolet detection, and combinations thereof.

In certain aspects, the identification of the components is achieved by comparison of mass spectrometry peaks with known compounds in a computer database.

### Chromatographic Surface materials

The invention utilizes a high purity chromatographic material (HPCM) comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety.

In certain aspects the HPCM may further comprise a chromatographic core material. In some aspects, the chromatographic core is a silica material; a hybrid inorganic/organic material; a superficially porous material; or a superficially porous particle. The chromatographic core material may be in the form of discreet particles or may be a monolith. The chromatographic core material may be any porous material and may be commercially available or may be produced by known methods, such as those methods described in, for example, in U.S. Patent Nos. 4,017,528, 6,528,167, 6,686,035 and 7,175,913. In some embodiments, the chromatographic core material may be a non-porous core.

The composition of the chromatographic surface material and the chromatographic core material (if present) may be varied by one of ordinary skill in the art to provide enhanced chromatographic selectivity, enhanced column chemical stability, enhanced column efficiency, and/or enhanced mechanical strength. Similarly, the composition of the surrounding material provides a change in hydrophilic/lipophilic balance (HLB), surface charge (*e.g.,* isoelectric point or silanol pKa), and/or surface functionality for enhanced chromatographic separation. Furthermore, in some embodiments, the composition of the chromatographic material may also provide a surface functionality for available for further surface modification.

The ionizable modifiers and the hydrophobic surface groups of of the HPCMs of the invention can be prepared using known methods. Some of the ionizable modifier reagents are commercially available. For example silanes having amino alkyl trialkoxysilanes, methyl amino alkyl trialkoxysilanes, and pyridyl alkyl trialkoxysilanes are commercially available. Other silanes such as chloropropyl alkyl trichlorosilane and chloropropyl alkyl trialkoxysilane are also commercially available. These can be bonded and reacted with imidazole to create imidazolyl alkyl silyl surface species, or bonded and reacted with pyridine to create pyridyl alkyl silyl surface species. Other acidic modifiers are also commercially available, including, but not limited to, sulfopropyltrisilanol, carboxyethylsilanetriol, 2-(carbomethoxy)ethylmethyldichlorosilane, 2-(carbomethoxy)ethyltrichlorosilane, 2-(carbomethoxy)ethyltrimethoxysilane, n-(trimethoxysilylpropyl)ethylenediamine, triacetic acid, (2-diethylphosphatoethyl)triethoxysilane, 2-(chlorosulfonylphenyl)ethyltrichlorosilane, and 2-(chlorosulfonylphenyl)ethyltrimethoxysilane.

It is known to one skilled in the art to synthesize these types of silanes using common synthetic protocols, including grinard reactions and hydrosilylations. Products can be purified by chromatography, recrystallization or distillation

Other additives such as isocyanates are also commercially available or can be synthesized by one skilled in the art. A common isocyanate forming protocol is the reaction of a primary amine with phosgene or a reagent known as Triphosgene.

In some embodiments the ionizable modifier contains a a carboxylic acid group, a sulfonic acid group, a phosphoric acid group, a boronic acid group, an amino group, an imido group, an amido group, a pyridyl group, an imidazolyl group, an ureido group, a thionyl-ureido group or an aminosilane group.

In other aspects the ionizable modifier reagent may be selected from groups formula (I) 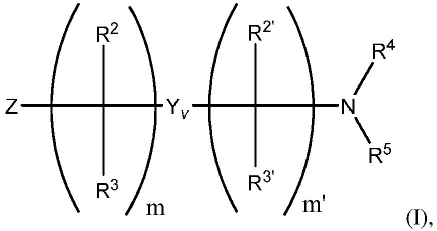 the formula (II): 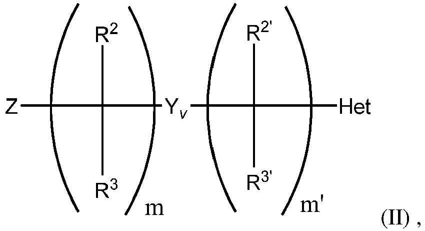 the formula (III): 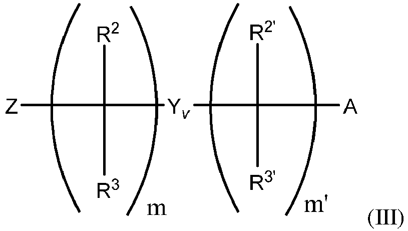 wherein
m is an integer from 1-8;
v is 0 or 1;
when v is 0, m' is 0;
when v is 1, m' is an integer from 1-8;
Z represents a chemically reactive group, including 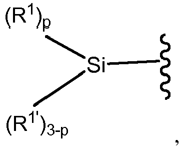 -OH, -OR⁶, amine, alkylamine, dialkylamine, isocyanate, acyl chloride, triflate, isocyanate, thiocyanate, imidazole carbonate, NHS-ester, carboxylic acid, ester, epoxide, alkyne, alkene, azide, -Br, -Cl, or -I;
Y is an embedded polar functionality;
each occurrence of R¹ independently represents a chemically reactive group on silicon, including (but not limited to) -H, -OH, -OR⁶, dialkylamine, triflate, Br, Cl, I, vinyl, alkene, or -(CH₂)_{m"}Q;
each occurrence of Q is -OH, -OR⁶, amine, alkylamine, dialkylamine, isocyanate, acyl chloride, triflate, isocyanate, thiocyanate, imidazole carbonate, NHS-ester, carboxylic acid, ester, epoxide, alkyne, alkene, azide, -Br, -Cl, or -I;
m" is an integer from 1-8
p is an integer from 1-3;
each occurrence of P^{1'} independently represents F, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl, fluoroalkyl, or fluoroaryl;
each occurrence of R², R² , R³ and R³ independently represents hydrogen, C₁-C₁₈ alkyl, C₂-C₁₈ alkenyl, C₂-C₁₈ alkynyl, C₃-C₁₈ cycloalkyl, C₂-C₁₈ heterocycloalkyl, C₅-C₁₈ aryl, C₅-C₁₈ aryloxy, or C₄-C₁₈ heteroaryl, -Z, or a group having the formula -Si(R')_{b}R"ₐ or-C(R')_{b}R"ₐ;
a and b each represents an integer from 0 to 3 provided that a + b = 3;
R' represents a C₁ - C₆ straight, cyclic or branched alkyl group;
R" is a functionalizing group selected from the group consisting of alkyl, alkenyl, alkynyl, aryl, cyano, amino, diol, nitro, ester, a cation or anion exchange group, an alkyl or aryl group containing an embedded polar functionality and a chiral moiety.
R⁴ represents hydrogen, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl;
R⁵ represents hydrogen, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl;
each occurrence of R⁶ independently represents C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl;
Het represents a heterocyclic or heteroaryl ring system comprising at least one nitrogen atom; and
A represents an acidic ionizable modifier moiety or a dual charge ionizable modifier moiety.

In yet other embodiments, the inoizable modifier is aminopropyltriethoxysilane, aminopropyltrimethoxysilane, 2-(2-(trichlorosilyl)ethyl)pyridine, 2-(2-(trimethoxy)ethyl)pyridine, 2-(2-(triethoxy)ethyl)pyridine, 2-(4-pyridylethyl)triethoxysilane, 2-(4-pyridylethyl)trimethoxysilane, 2-(4-pyridylethyl)trichlorosilane, chloropropyltrimethoxysilane, chloropropyltrichlorosilane, chloropropyltrichlorosilane, chloropropyltriethoxysilane, imidazolylpropyltrimethoxysilane, imidazolylpropyltriethoxysilane, imidazolylpropyl trichlorosilane, sulfopropyltrisilanol, carboxyethylsilanetriol, 2-(carbomethoxy)ethylmethyldichlorosilane, 2-(carbomethoxy)ethyltrichlorosilane, 2-(carbomethoxy)ethyltrimethoxysilane, n-(trimethoxysilylpropyl)ethylenediamine triacetic acid, (2-diethylphosphatoethyl)triethoxysilane, 3-mercaptopropyltriethoxysilane, 3-mercaptopropyltrimethoxysilane, bis[3-(triethoxysilyl)propyl]disulfide, bis[3-(triethoxysilyl)propyl]tetrasulfide, 2,2-dimethoxy-1-thia-2-silacyclopentane, bis(trichlorosilylethyl)phenylsulfonyl chloride, 2-(chlorosulfonylphenyl)ethyltrichlorosilane, 2-(chlorosulfonylphenyl)ethyltrimethoxysilane, 2-(ethoxysulfonylphenyl)ethyltrimethoxysilane, 2-(ethoxysulfonylphenyl)ethyltrimethoxysilane, 2-(ethoxysulfonylphenyl)ethyltrichlorosilane, sulphonic acid phenethyltrisilanol, (triethoxysilyl ethyl)phenyl phosphonic acid diethyl ester, (trimethoxysilyl ethyl)phenyl phosphonic acid diethyl ester, (trichlorosilyl ethyl)phenyl phosphonic acid diethyl ester, phosphonic acid phenethyltrisilanol, N-(3-trimethoxysilylpropyl)pyrrole, N-(3-triethoxysilylpropyl)-4,5-dihydroimidazole, bis(methyldimethoxysilylpropyl)-N-methylamine, tris(triethoxysilylpropyl)amine, bis(3-trimethoxysilylpropyl)-N-methylamine, (N,N-diethyl-3-aminopropyl)trimethoxysilane, N-(hydroxyethyl)-N-methylaminopropyltrimethoxysilane, 3-(N,N-dimethylaminopropyl)trimethoxysilane, bis(2-hydroxyethyl)-3-aminopropyltriethoxysilane, N,N'-bis(hydroxyethyl)-N,N'-bis(trimethoxysilylpropyl)ethylenediamine, or N,N-dimethyl-3-aminopropylmethyldimethoxysilane.

In certain embodiments, when the ionizable modifier is of the formula (III), the acidic ionizable modifiers is a protected or deprotected forms of trisilanol, trialkoxysilane or trichlorosilane; or a salt of sulfonic acid alkyl silanes, sulfonic acid phenylalkyl silanes, sulfonic acid benzylalkyl silanes, sulfonic acid phenyl silanes, sulfonic acid benzyl silanes, carboxylic acid alkyl silanes, carboxylic acid phenylalkyl silanes, carboxylic acid benzylalkyl silanes, carboxylic acid phenyl silanes, carboxylic acid benzyl silanes, phosphoric acid alkyl silanes, phosphonic acid phenylalkyl silanes, phosphonic acid benzylalkyl silanes, phosphonic acid phenyl silanes, phosphonic acid benzyl silanes, boronic acid alkyl silanes, boronic acid phenylalkyl silanes, boronic acid benzylalkyl silanes, boronic acid phenyl silanes, boronic acid benzyl silanes.

In certain embodiments, when the ionizable modifier is of the formula (III), the acidic ionizable modifiers is a protected or deprotected version or a salt of sulfonic acid alkyl isocyanates, sulfonic acid phenylalkyl isocyanates, sulfonic acid benzylalkyl isocyanates, sulfonic acid phenyl isocyanates, sulfonic acid benzyl isocyanates carboxylic acid alkyl isocyanates, carboxylic acid phenylalkyl isocyanates, carboxylic acid benzylalkyl isocyanates, carboxylic acid phenyl isocyanates, carboxylic acid benzyl isocyanates, phosphoric acid alkyl isocyanates, phosphonic acid phenylalkyl isocyanates, phosphonic acid benzylalkyl isocyanates, phosphonic acid phenyl isocyanates, phosphonic acid benzyl isocyanates, boronic acid alkyl isocyanates, boronic acid phenylalkyl isocyanates, boronic acid benzylalkyl isocyanates, boronic acid phenyl isocyanates, or boronic acid benzyl isocyanates.

In certain embodiments, when the inoizable modifier reagent is selected from formula (III), A respresents a dual charge ionizable modifier moiety. While not limited to theory; the dual charge ionizable modifier moiety has two sub-groups that can display opposite charges. Under some conditions the dual charge ionizable modifier moiety can act similarly to a zwitterions and ampholytes to display both a positive and negative charge and maintain a zero net charge. Under other conditions the dual charge ionizable modifier moiety may only have one group ionized and may display a net positive or negative charge. Dual charge ionizable modifier moieties include, but are not limited to, alkyl, branched alkyl, aryl, cyclic, polyaromatic, polycyclic, hertocyclic and polyheterocyclic groups that can display a positive charge (commonly on a nitrogen or oxygen atom), and a negative charge through an acidic group that includes a carboxylic, sulfonic, phosphonic or boronic acid. Alternatively, some metal containing complexes can display both positive and negative charges. Dual charge ionizable modifier moieties may also include, but are not limited to zwitterions, ampholyte, amino acid, aminoalkyl sulfonic acid, aminoalkyl carboxylic acid, mono and di-methylaminoalkyl sulfonic acid, mono and di-methylaminoalkyl carboxylic acid, pyridinium alkyl sulfonic acid, and pyridinium alkyl carboxylic acid groups. Alternatively the dual charge ionizable modifier moiety may be 2-(N-morpholino)ethanesulfonic acid, 3-(N-morpholino)propanesulfonic acid, 4-(2-hydroxyethyl)-1-piperazine ethanesulfonic acid), piperazine-N,N'-bis(2-ethanesulfonic acid), N-cyclohexyl-3-aminopropanesulfonic acid, N-cyclohexyl-2-hydroxyl-3-aminopropanesulfonic acid, 3-[(3-cholamidopropyl)dimethylammonio]-1-propanesulfonate, 6-Methyl-9,10-didehydro-ergoline-8-carboxylic acid, phenolsulfonphthalein, betaines, quinonoids, N,N-bis(2-hydroxyethyl)glycine, and N-[tris(hydroxymethyl)methyl]glycine groups.

In some embodiments, the ratio of the hydrophobic surface group : ionizable modifier in the HPCM of the invention is is from about 4:1 to about 150:1; from about 20:1 to about 100:1; or from about 25:1 to about 100:1.

In other embodiments, the concentration of ionizable modifier in the HPCM of the invention is less than about 0.5 µmol/m²; less than about 0.4 µmol/m²; less than about 0.3 µmol/m²; from about 0.01 µmol/m² to about 0.5 µmol/m²; from about 0.1 µmol/m² to about 0.4 µmol/m²; or from about 0.2 µmol/m² to about 0.3 µmol/m².

In still another aspect, the HPCM of the invention has a quantified surface coverage ratio, B/A, from about 2.5 to about 300 wherein A represents the ionizable modifier and B represents the hydrophobic group. In certain aspects, the quantified surface coverage ratio, B/A, is from about 3 to about 200, from about 4 to about 35 or from about 5 to about 22.

In another aspect, the hydrophobic surface group of the HPCM of the invention is a C4 to C18 bonded phase. In certain aspects, the hydrophobic surface group is a C18 bonded phase. In still other aspects, the hydrophobic surface group is an embedded polar bonded phase. In other aspects, the hydrophobic surface group is an aromatic, phenylalkyl, fluoro-aromatic, phenylhexyl, or pentafluorophenylalkyl bonded phase. In another aspect, the hydrophobic surface group is a C₄-C₃₀, embedded polar, chiral, phenylalkyl, or pentafluorophenyl bonding or coating.

In certain embodiments, the HPCM of the invention may be in the form of a particle, a monolith or a superficially porous material. In certain other aspects, the HPCM of the invention is a non-porous material.

In certain aspects, the HPCM of the invention may be an inorganic material (*e.g.,* silica,), a hybrid organic/inorganic material, an inorganic material (*e.g.,* silica) with a hybrid surface layer, a hybrid particle with a inorganic (*e.g.,* silica) surface layer, or a hybrid particle with a different hybrid surface layer.

In one embodiment, the HPCM of the invention does not have chromatographically enhancing pore geometry. In another embodiment, the HPCM of the invention has chromatographically enhancing pore geometry.

In certain embodiments, the HPCM of the invention has a surface area of about 25 to 1100 m²/g; about 80 to 500 m²/g; or about 120 to 330 m²/g.

In other embodiments, the HPCM of the invention a pore volume of about 0.15 to 1.7 cm³/g; or about 0.5 to 1.3 cm³/g.

In certain other embodiments, the HPCM of the invention is non-porous.

In yet other embodiments, the HPCM of the invention has a micropore surface area of less than about 110 m²/g; less than about 105 m²/g; less than about 80 m²/g; or less than about 50 m²/g.

In still yet other embodiments, the HPCM of the invention has an average pore diameter of about 20 to 1500Å; about 50 to 1000Å; about 100 to 750Å; or about 150 to 500Å.

In another embodiment, the HPCM of the invention is hydrolytically stable at a pH of about 1 to about 14; at a pH of about 10 to about 14; or at a pH of about 1 to about 5.

In another aspect, the invention provides materials as described herein wherein the HPCM material further comprises a nanoparticle or a mixture of more than one nanoparticles dispersed within the chromatographic surface.

In certain embodiments, the nanoparticle is present in <20% by weight of the nanocomposite, <10% by weight of the nanocomposite, or <5% by weight of the nanocomposite.

In other embodiments, the nanoparticle is crystalline or amorphous and may be silicon carbide, aluminum, diamond, cerium, carbon black, carbon nanotubes, zirconium, barium, cerium, cobalt, copper, europium, gadolinium, iron, nickel, samarium, silicon, silver, titanium, zinc, boron, oxides thereof, or a nitride thereof. In particular embodiments, the nanoparticle is a substance which comprises one or more moieties selected from the group consisting of nano-diamonds, silicon carbide, titanium dioxide, and cubic-boronitride.

In other embodiments, the nanoparticles may be less than or equal to 200 nm in diameter, less than or equal to 100 nm in diameter, less than or equal to 50 nm in diameter, or less than or equal to 20 nm in diameter.

### Surface Modification

The HPCM materials utilized in the invention may further be surface modified.

Thus, in one embodiment, the material as described herein may be surface modified with a surface modifier having the formula Zₐ(R')_{b}Si-R", where Z = Cl, Br, I, C₁ - C₅ alkoxy, dialkylamino or trifluoromethanesulfonate; a and b are each an integer from 0 to 3 provided that a + b = 3; R' is a C₁ - C₆ straight, cyclic or branched alkyl group, and R" is a functionalizing group.

In another embodiment, the materials have been surface modified by coating with a polymer.

In certain embodiments, R' is selected from the group consisting of methyl, ethyl, propyl, isopropyl, butyl, t-butyl, sec-butyl, pentyl, isopentyl, hexyl and cyclohexyl. In other embodiments, R' is selected from the group consisting of alkyl, alkenyl, alkynyl, aryl, cyano, amino, diol, nitro, ester, a cation or anion exchange group, an alkyl or aryl group containing an embedded polar functionality and a chiral moiety. In certain embodiments, R' is selected from the group consisting of aromatic, phenylalkyl, fluoroaromatic, phenylhexyl, pentafluorophenylalkyl and chiral moieties.

In one embodiment, R" is a C₁ - C₃₀ alkyl group. In a further embodiment, R" comprises a chiral moiety. In another further embodiment, R" is a C₁ - C₂₀ alkyl group.

In certain embodiments, the surface modifier comprises an embedded polar functionality. In certain embodiments, such embedded polar functionality includes carbonate, amide, urea, ether, thioether, sulfinyl, sulfoxide, sulfonyl, thiourea, thiocarbonate, thiocarbamate, ethylene glycol, heterocyclic, or triazole functionalities. In other embodiments, such embedded polar functionality includes carbamate functionalities such as disclosed in U. S. Patent No. 5,374,755, and chiral moieties. Such groups include those of the general formula 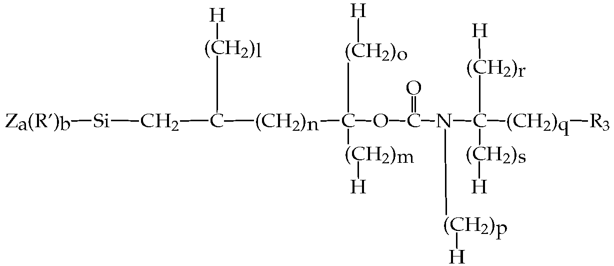 wherein l, m, o, r and s are 0 or 1, n is 0, 1, 2 or 3 p is 0, 1, 2, 3 or 4 and q is an integer from 0 to 19; R₃ is selected from the group consisting of hydrogen, alkyl, cyano and phenyl; and Z, R', a and b are defined as above. Preferably, the carbamate functionality has the general structure indicated below: 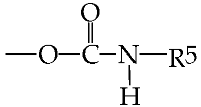 wherein R⁵ may be, e.g., cyanoalkyl, t-butyl, butyl, octyl, dodecyl, tetradecyl, octadecyl, or benzyl. Advantageously, R⁵ is octyl, dodecyl, or octadecyl.

In certain embodiments, the surface modifier is selected from the group consisting of phenylhexyltrichlorosilane, pentafluorophenylpropyltrichlorosilane, octyltrichlorosilane, octadecyltrichlorosilane, octyldimethylchlorosilane and octadecyldimethylchlorosilane. In some embodiments, the surface modifier is selected from the group consisting of octyltrichlorosilane and octadecyltrichlorosilane. In other embodiments, the surface modifier is selected from the group consisting of an isocyanate or 1,1'-carbonyldiimidazole (particularly when the hybrid group contains a (CH₂)₃OH group).

In another embodiment, the material has been surface modified by a combination of organic group and silanol group modification.

In still another embodiment, the material has been surface modified by a combination of organic group modification and coating with a polymer. In a further embodiment, the organic group comprises a chiral moiety.

In yet another embodiment, the material has been surface modified by a combination of silanol group modification and coating with a polymer.

In other embodiments, the material has been surface modified via formation of an organic covalent bond between the particle's organic group and the modifying reagent.

In still other embodiments, the material has been surface modified by a combination of organic group modification, silanol group modification and coating with a polymer.

In another embodiment, the material has been surface modified by silanol group modification.

In certain embodiments, the surface modified layer may be porous or non-porous.

### Synthesis of Materials Utilized by the Invention

The high purity chromatographic materials (HPCM) materials described herein may be synthesized by the methods disclosed in International Patent Application Publication No. WO 2011/017418.

### EXAMPLES

The present invention may be further illustrated by the following non-limiting examples describing the surface modification of porous chromatographic materials.

### Materials

All reagents were used as received unless otherwise noted. Those skilled in the art will recognize that equivalents of the following supplies and suppliers exist and, as such, the suppliers listed below are not to be construed as limiting.

### Characterization

Those skilled in the art will recognize that equivalents of the following instruments and suppliers exist and, as such, the instruments listed below are not to be construed as limiting.

The %C, %H, %N values were measured by combustion analysis (CE-440 Elemental Analyzer; Exeter Analytical Inc., North Chelmsford, MA) or %C by Coulometric Carbon Analyzer (modules CM5300, CM5014, UIC Inc., Joliet, IL). The specific surface areas (SSA), specific pore volumes (SPV) and the average pore diameters (APD) of these materials were measured using the multi-point N₂ sorption method (Micromeritics ASAP 2400; Micromeritics Instruments Inc., Norcross, GA). The SSA was calculated using the BET method, the SPV was the single point value determined for P/P₀ > 0.98 and the APD was calculated from the desorption leg of the isotherm using the BJH method. Scanning electron microscopic (SEM) image analyses were performed (JEOL JSM-5600 instrument, Tokyo, Japan) at 7 kV. Particle sizes were measured using a Beckman Coulter Multisizer 3 analyzer (30 µm aperture, 70,000 counts; Miami, FL). The particle diameter (dp) was measured as the 50% cumulative diameter of the volume based particle size distribution. The width of the distribution was measured as the 90% cumulative volume diameter divided by the 10% cumulative volume diameter (denoted ⁹⁰/₁₀ ratio). Multinuclear (¹³C, ²⁹Si) CP-MAS NMR spectra were obtained using a Bruker Instruments Avance-300 spectrometer (7 mm double broadband probe). The spinning speed was typically 5.0-6.5 kHz, recycle delay was 5 sec. and the cross-polarization contact time was 6 msec. Reported ¹³C and ²⁹Si CP-MAS NMR spectral shifts were recorded relative to tetramethylsilane using the external standards adamantane (¹³C CP-MAS NMR, δ 38.55) and hexamethylcyclotrisiloxane (²⁹Si CP-MAS NMR, δ -9.62). Populations of different silicon environments were evaluated by spectral deconvolution using DMFit software. [Massiot, D.; Fayon, F.; Capron, M.; King, I.; Le Calvé, S.; Alonso, B.; Durand, J.-O.; Bujoli, B.; Gan, Z.; Hoatson, G. Magn. Reson. Chem. 2002, 40, 70-76] Titrations were performed using a Metrohm 716 DMS Titrino autotitrator with 6.0232.100 pH electrode (Metrohm, Hersau, Switzerland, or equivalent).

### EXAMPLE 1

Lipids are both the building blocks and main repository of energy in cell membranes. Recent studies have shown that lipids can also play essential roles as signaling molecules and have the potential to revolutionize biomarker discovery and future diagnostic testing for various diseases.

Mass spectrometric based global lipid profiling techniques are diverse in both method of sample introduction and detection. Direct infusion method has prevailed historically due to the apparent simplicity and application to a wide range of lipid species. Similar considerations have also lead to nominal mass instruments being the preferred detection platform for lipid interrogation. However, when choosing any analysis technique it is important to consider the complexity of the biological sample, including issues such as ion suppression from high abundant lipid species and the need for detection and quantification of low abundant and isobaric lipid species. This example utilizes a novel platform based upon reverse phase UPLC® and exact mass MS detection that aims to address these challenges with a simple, comprehensive and automated novel UPLC/TOF HDMS^{E} lipid discovery workflow using Synapt™ G2. The workflow was developed using bovine liver and rat plasma total lipid extract to maximize the amount of information obtained using a UPLC/HDMS^{E} analysis.

### Sample Preparation

**Avanti bovine liver total lipid extract:** 5 mg/mL stock solution was prepared in chloroform/methanol (2/1, v/v). A working 0.1 mg/mL solution was prepared by diluting the stock solution with isopropanol/acetonitrile/water (50/25/25).

**Plasma total lipid extract:** 25 µL rat plasma was mixed with 200 µL chloroform/methanol (2/1). Sample was vortexed for 30 s and allowed to stand for 5 min followed by vortexing for 30 s. Sample was centrifuged at 13,000 x g for 5 min. The lower organic phase containing lipids was collected through the protein disc to a new vial. The organic phase was dried under vacuum. Prior to injection, the dried extract was reconstituted in 25 µL chloroform/methanol (2/1) and diluted to a final volume of 10x the original volume of plasma with isopropanol/acetonitrile/water (50/25/25).

### UPLC Conditions

Instrument Waters ACQUITY UPLC System
Column ACQUITY CSH™ C18, 1.7µm, 2.1 x 100 mm
Column temp 55 °C
Mobile phase A) 10 mM NH4HCO2 in ACN/H2O (60/40)
B) 10 mM NH4HCO2 in IPA/ACN (90/10)
Injection 5 µL
Flow rate 0.4 mL/min
Gradient

| **Time (min)** | **% A** | **% B** | **Curve** |
|---|---|---|---|
| Initial | 60.0 | 40.0 | Initial |
| 2.0 | 57.0 | 43.0 | 6 |
| 2.1 | 50 | 50 | 1 |
| 12.0 | 46 | 54 | 6 |
| 12.1 | 30.0 | 70.0 | 1 |
| 18.0 | 1.0 | 99.0 | 6 |
| 18.1 | 60.0 | 40.0 | 6 |
| 20.0 | 60.0 | 40.0 | 1 |

### MS Conditions

MS System Waters Synapt™ HDMS
Mode of operation TOF MSE and TOF HDMSE
Ionization ESI +ve and -ve
Capillary voltage 2.0 KV (+ve) and 1.0 KV (-ve)
Cone voltage 30.0 V
Trap CE* Ramp 30-40 V (+ve) and 30-50V (-ve)
Source temp. 120.0
Desolvation temp. 550.0
Cone gas 50 L/H
Desolvation gas 900 L/H
Mobility gas 90.0 mL/min
Acquisition range 50-1200
*For HDMS^{E} positive mode ramp collision energy 35-55 V.

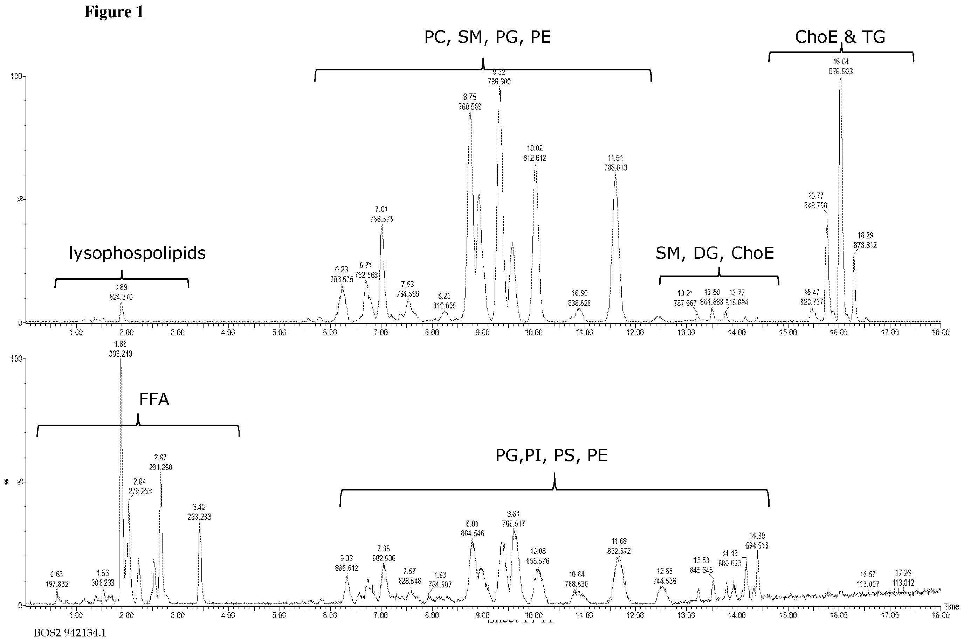

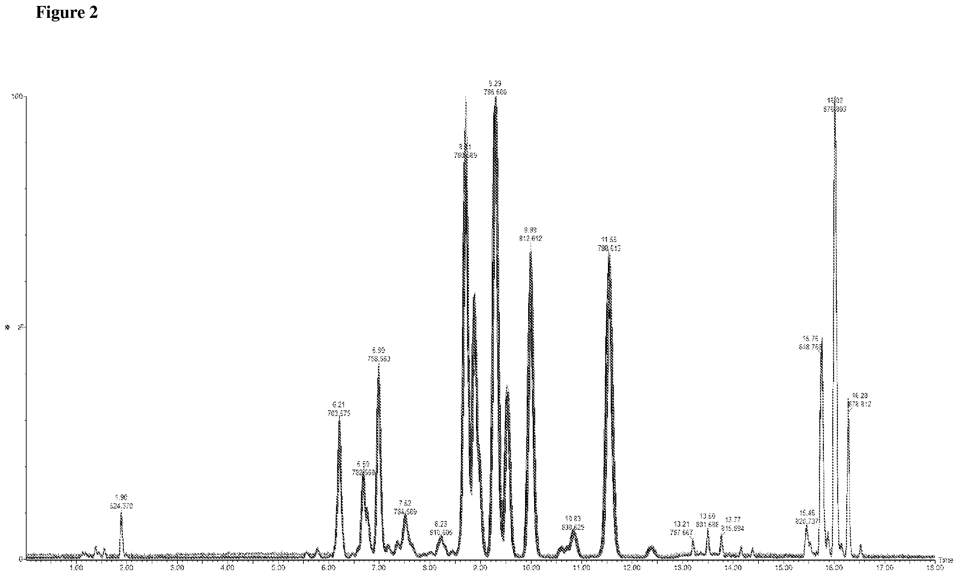

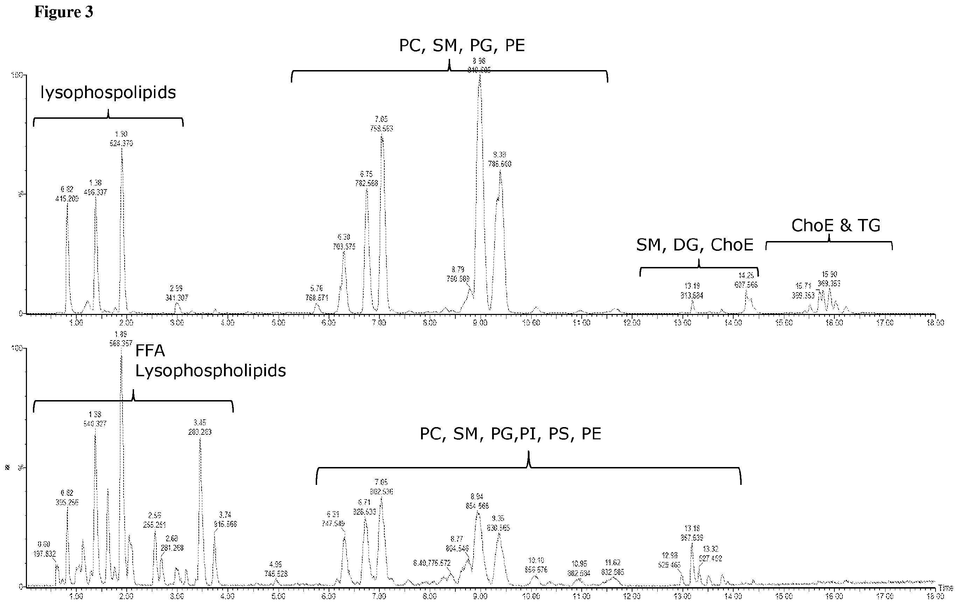

Comprehensive and complete datasets were collected using UPLC/HDMS^{E} acquisition mode with CSH C18 column (Figures 1-3) . CSH C18 stands for Charged Surface Hybrid and it is made by applying controlled low level positive charges to BEH (Ethylene Bridged Hybrid) particle surface and bonded with C18[1]. The CSH C18 column comprises an HPCM material as described herein. The presence of low level charges helps to separate lipids based on acidic, basic and neutral properties. As shown herein, for the first time, CSH C18 chemistry is applied to lipids and provides superior separation, peak shape and excellent chromatographic reproducibility over existing methods from a complex biological sample.

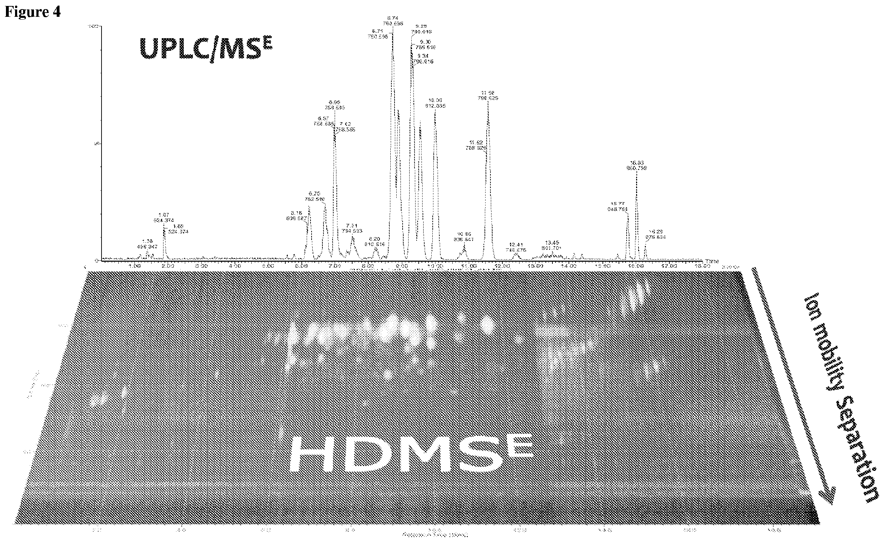

The HDMS^{E} acquisition method utilizes parallel low and elevated collision energy to provide precursor and product ion information for every detectable component in the mixture [See, Shockcor, J.; et al. Waters Application Note 720003349en; and Castro-Perez, J.M.; et al. J. Proteome Res., 2010, 9, 2377-2389.]. Chromatographic co-eluting peaks were further enhanced with Ion Mobility Separation (IMS) which simplified the lipid identification by separating isomeric lipid species. Figure 4, shows the orthogonal separation of liver lipid extract based on retention time and drift time which provided greater specificity and hence positive lipid identification at greater confidence.

The data generated by HDMS^{E} was extracted using MS^{E} Data Viewer providing a graphical output to browse the data. Precursor and fragment spectra were then aligned according to retention and drift times and linked together. As an example the ions shown in the low energy at *m*/*z* 876.8068 and 881.7616 (NH4 and Na adducts respectively) were aligned to their corresponding elevated energy characteristic fragment ions at *m*/*z* 577.5199 and 603.5364 based on retention and drift times. Lipid species present were identified using SimLipid®. For example the *m*/*z* 876.8068 [M+NH4]+ and 881.7616[M+Na]+ generated experimental diagnostic fragment ions at *m*/*z* 577.5199 and 603.5364 from the high energy HDMS^{E} data. The returned SimLipid database hit was scored based upon the match of experimental to *in-silico* predicted fragment ions. The correct lipid was identified as a top hit for 16:0/18:1/18:1 triaclglycerides due to the additional dimension of specificity and separation provided by HDMS^{E}.

### Conclusion

The presence of low level amount of positive charges on the CSH C₁₈ chromatographic material was expected to separate lipid molecular species based on acidic, basic or neutral properties. The theoretically expected elution order (for example compared to HSS T3 column) would have been basic, acididc and neutral molecules. But the long chain sphingomyeline molecular species (shown in figure 1. positive mode at m/z 787.66, 801.68 and 815.69) were separated well from the rest of the phospholipids (retention time between 13-14 minutes). This might imply that the separation depends on a combination of different factors such as the property of the analyte (acidity or basity), the number of carbon atoms on the fatty acid, the number of double bonds on the fatty acid chain and the head group of the lipid.

As such, this example has demonstrated that a simple, comprehensive and automated confident lipid identification method has been developed using UPLC/TOF HDMSE for global lipid profiling based on orthogonal parameters precursor exact mass, *in-Silico* characteristic fragment ions, retention time and drift time from a complex biological. CSH C18 chemistry as applied to lipids provided superior separation, peak shape and excellent chromatographic reproducibility over existing methods. HDMSE provides an additional dimension of sample separation, increasing specificity and positive lipid identification at even greater confidence.

### EXAMPLE 2 - Lipid Separation using UPLC with Charged Surface Hybrid Technology

Conventional mass spectrometric analysis of lipids is often performed by direct infusion, or reversed-phase (RP) / normal-phase (NP) HPLC.2-5 However, each of these methods faces its own challenges.

With direct infusion, chromatographic separation of lipids is not performed prior to injection into the mass spectrometer. This method of sample introduction gives rise to ion suppression and it does not allow for separation of isobaric lipids, which can complicate the resultant analysis, necessitating deconvolution, and compromising the sensitivity of the method. In order to fully explore the lipidome, a technique of sample introduction into the mass spectrometer that minimizes these issues is needed.

NP chromatography allows separation of lipids by class but often suffers from long elution times, is difficult to handle due to the volatility and toxicity of the mobile phase, and proves challenging for ionization and introduction into mass spectrometry. Recent work in HILIC chromatography overcomes many of these issues.

Traditional RP methods similarly suffer from extensive elution times and the quality of the resulting chromatography is relatively poor. Peak capacity and resolution are compromised in a typical analysis and it is not unusual to see peaks widths > 30 seconds, which ultimately results in poor sensitivity and difficulty in characterization.

In this example, novel RP-UPLC separations are performed according to the invention. The combination of sub-2-micron particle size with an optimized liquid chromatography system and novel chemistry allows for a significantly improved RP method that maximizes the performance of these particles and is optimized for the analysis of complex lipid mixtures.

### Sample Preparation

### Standard lipid mixtures

Lipid standards were purchased from Avanti Polar Lipids and Nu-Chek Prep. The standards were diluted prior to analysis in isopropanol/acetonitrile/ water (2:1:1, 250 µL). The list of lipid standards analyzed and other detailed information is provided in Table 1.

### Total liver extract

A total lipid extract from bovine liver was purchased from Avanti Polar Lipids. The extract was prepared by making a 5 mg/mL stock solution in chloroform/methanol (2:1). A working 0.1 mg/mL solution was then prepared by diluting the stock solution with isopropanol/acetonitrile/water (2:1:1).

### Total plasma extract

Rat plasma (25 µL) from Equitech-Bio, Inc. was extracted with 100 µL of chloroform/methanol (2:1); this solution was then allowed to stand for 5 min at room temperature, followed by vortexing for 30 s. After centrifuging (12,000 g, for 5 min at 4 °C) the lower organic phase was collected in a new vial and evaporated to dryness under vacuum. Immediately prior to analysis the lipid extract was diluted with isopropanol/acetonitrile/water (2:1:1, 250 pL).

### UPLC Conditions

Instrument Waters ACQUITY UPLC System
Column ACQUITY CSH™ C18, 1.7µm, 2.1 x 100 mm
Column temp 55 °C
Mobile phase
   A) Acetonitrile/water (60:40) with 10 mM ammonium formate and 0.1% formic acid
   B) Isopropanol/acetonitrile (90:10) with 10 mM ammonium formate and 0.1% formic acid
Injection 5 µL
Flow rate 0.4 mL/min
Gradient

| **Time (min)** | **% A** | **% B** | **Curve** |
|---|---|---|---|
| Initial | 60.0 | 40.0 | Initial |
| 2.0 | 57.0 | 43.0 | 6 |
| 2.1 | 50 | 50 | 1 |
| 12.0 | 46 | 54 | 6 |
| 12.1 | 30.0 | 70.0 | 1 |
| 18.0 | 1.0 | 99.0 | 6 |
| 18.1 | 60.0 | 40.0 | 6 |
| 20.0 | 60.0 | 40.0 | 1 |

### MS Conditions

| | |
|---|---|
| MS System | Waters Synapt™ HDMS |
| Mode of operation | TOF MSE and TOF HDMSE |
| Ionization | ESI +ve and -ve |
| Capillary voltage | 2.0 KV (+ve) and 1.0 KV (-ve) |
| Cone voltage | 30.0 V |
| Trap CE* Ramp | 30-40 V (+ve) and 30-50V (-ve) |
| Source temp. | 120.0 |
| Desolvation temp. | 550.0 |
| Cone gas | 50 L/H |
| Desolvation gas | 900 L/H |
| Mobility gas | 90.0 mL/min |
| Acquisition range | 50-1200 |

| | |
|---|---|
| *For HDMSE positive mode ramp collision energy 35-55 V. | |

### RESULTS AND DISCUSSION

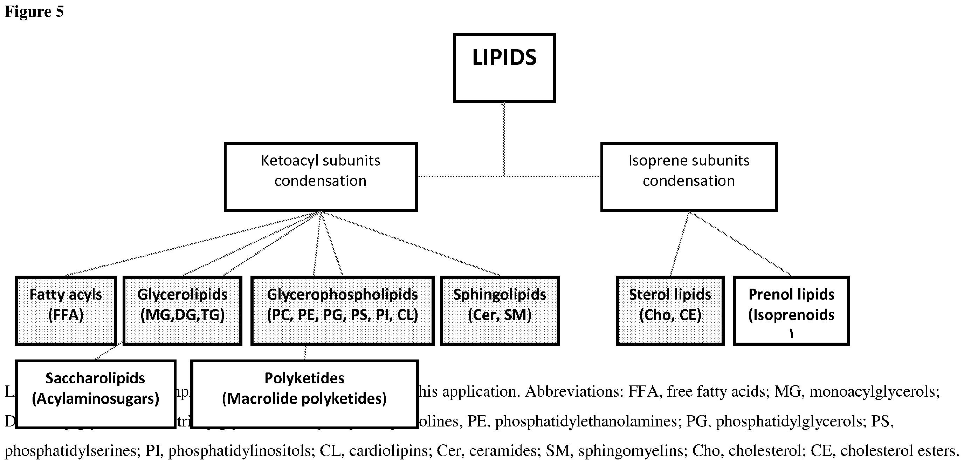

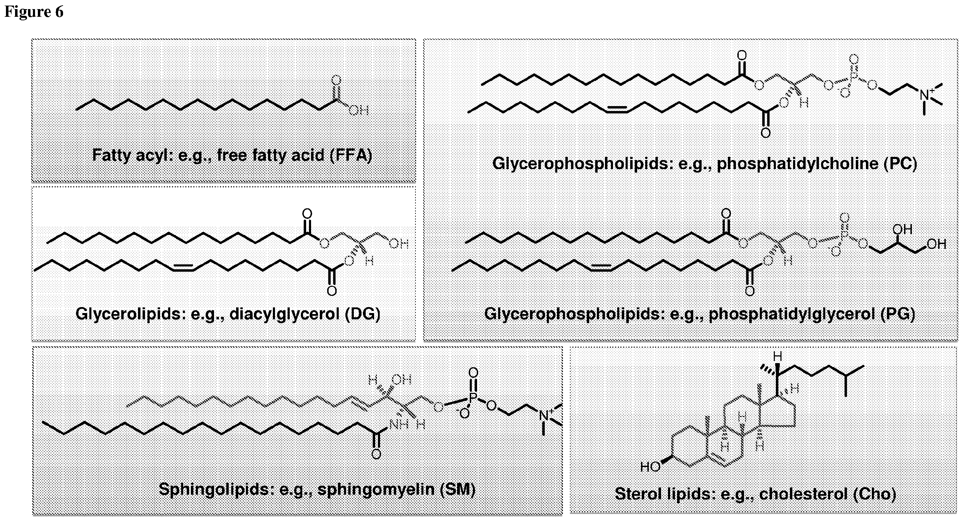

The UPLC RP method employed for this analysis showed improved separation of both inter and intra class lipids over traditional HPLC RP methods. Figures 5 and 6 show the lipid classes based on Lipid MAPS classification and representative structures for major lipid categories respectively. The italicized classes were included in the standard mix, which reflect the most abundant lipids present in animal tissues.

The resolution, sensitivity, and speed of analysis were significantly increased compared with HPLC. The CSH chemistry's charged surface is believed to interact with the lipids on column in a unique manner. Due to the diverse chemical nature of lipids, from highly polar to highly non-polar, a different mechanism of retention from traditional RP columns was observed.

The additional speed allows for large sample sets to be analyzed efficiently, while the added resolution and sensitivity increase peak purity. This provided added confidence in the assignment of a lipid or class of lipids while allowing identification to be made at lower concentrations.

The initial analysis focused on the separation of a mixture of 67 lipid standards, as shown in the table below.

| **Lipid sub class** | **Lipid molecular species** | **Concentration (pmol/uL)** | **Rt* (min)** | **Peak ID** |
|---|---|---|---|---|
| **FA** | C13:1 (12Z) | 4.00 | 1.24 | ** |
| | C17:1 (10Z) | 4.00 | 2.30 | ** |
| | C23:1 (14Z) | 4.00 | 5.44 | ** |
| **MG** | 14:1 (9Z) | 4.00 | 1.11 | 5 |
| | 17:1 (10Z) | 4.00 | 1.70 | 9 |
| | 19:2 (10Z, 13Z) | 4.00 | 1.87 | 10 |
| **D5-DG Mix I** | 1,3-14:0/14:0 | 2.00 | 7.60 | 27 |
| | 1,3-15:0/15:0 | 2.00 | 10.17 | 32 |
| | 1,3-16:0/16:0 | 2.00 | 12.98 | 36 |
| | 1,3-17:0/17:0 | 2.00 | 13.60 | 40 |
| | 1,3-19:0/19:0 | 2.00 | 14.55 | 46 |
| | 1,3-20:5 (5Z,8Z,11Z,14Z,17Z)/20:5 (5Z,8Z,11Z,14Z,17Z) | 2.00 | 5.41 | 16 |
| | 1,3-20:4 (5Z,8Z,11Z,14Z)/20:4 | | | |
| | (5Z,8Z,11Z,14Z) | 2.00 | 7.88 | 28 |
| | 1,3-20:2 (11Z, 14Z)/20:2 (11Z, 14Z) | 2.00 | 13.23 | 38 |
| | 1,3-20:0/20:0 | 2.00 | 14.95 | 49 |
| **DG** | 19:1/19:1 (10Z) | 4.00 | 13.65 | 42 |
| | 19:1/19:1 (10Z) 1,3 isomer | 4.00 | 13.65 | 43 |
| **D5-TG Mix I** | 14:0/16:1 (9Z)/14:0 | 2.00 | 14.99 | 50 |
| | 15:0/18:1 (9Z)/15:0 | 2.00 | 15.65 | 53 |
| | 16:0/18:0/16:0 | 2.00 | 16.24 | 57 |
| | 19:0/12:0/19:0 | 2.00 | 16.24 | 58 |
| | 17:0/17:1(10Z)/17:0 | 2.00 | 16.08 | 55 |
| | 20:4(5Z,8Z,11Z,14Z)/18:2 (9Z, 12Z)/20:4(5Z,8Z,11Z,14Z) | 2.00 | 14.90 | 48 |
| | 20:2 (11Z, 14Z)/18:3 (6Z, 9Z, 12Z)/20:2 (11Z, 14Z) | 2.00 | 15.46 | 51 |
| | 20:5 (5Z,8Z,11Z,14Z,17Z)/22:6 (4Z,7Z,10Z,13Z,16Z,19Z)/20:5 (5Z,8Z,11Z,14Z,17Z) | 2.00 | 14.10 | 44 |
| | 20:0/20:1 (11Z)/20:0 | 2.00 | 17.13 | 62 |
| **TG** | 19:2 (10Z, 13Z)/19:2 (10Z, 13Z)/19:2 (10Z, 13Z) | 4.00 | 15.57 | 52 |
| **PC Lyso PC** | 17:0/20:4 (5Z, 8Z, 11Z, 14Z) | 2.18 | 7.25 | 25 |
| | 18:1 (9Z)/18:0 | 4.00 | 10.84 | 33 |
| | 19:0/19:0 | 4.00 | 13.60 | 41 |
| | 21:0/22:6 (4Z,7Z,10Z,13Z,16Z,19Z) | 2.28 | 11.74 | 35 |
| | 17:0 | 4.00 | 1.50 | 8 |
| **PA** | 16:0/18:1 | 4.00 | 7.92 | 29 |
| **PE Lyso PE** | 15:0/15:0 | 4.00 | 6.46 | 20 |
| | 17:0/17:0 | 4.00 | 11.38 | 34 |
| | 18:0/18:0 | 4.00 | 13.20 | 37 |
| | 17:1 (10Z) | 4.00 | 1.25 | 7 |
| **PS Lyso PS** | 16:0/18:1 (9Z) | 4.00 | 6.38 | 19 |
| | 17:0/20:4 (5Z, 8Z, 11Z, 14Z) | 2.61 | 5.70 | 17 |
| | 18:1 (9Z)/18:1 (9Z) | 4.00 | 6.54 | 21 |
| | 21:0/22:6 (4Z,7Z,10Z,13Z,16Z,19Z) | 2.28 | 9.20 | 31 |
| | 17:1 (10Z) | 4.00 | 1.00 | 2 |
| **PG Lyso PG** | 14:0/14:0 | 4.00 | 3.81 | 13 |
| | 17:0/17:0 | 4.00 | 8.36 | 30 |
| | 18:1 (9Z)/18:1 (9Z) | 4.00 | 6.71 | 22 |
| | 18:1 (9E)/18:1 (9E) | 4.00 | 7.36 | 26 |
| | 18:0/18:2 (9Z, 12Z) | 4.00 | 6.97 | 24 |
| | 17:1 (10Z) | 4.00 | 1.00 | 3 |
| **Lyso PI** | 17:1 (10Z) | 25.00 | 1.00 | 1 |
| **CL Mix I** | 14:1 (9Z)/14:1 (9Z)/14:1 (9Z)/15:1 (10Z) | 4.00 | 13.29 | 39 |
| | 15:0/15:0/15:0/16:1 (9Z) | 4.00 | 14.82 | 47 |
| | 22:1 | | | |
| | (13Z)/22:1(13Z)/22:1(13Z)/14:1 (9Z) | 4.00 | 16.32 | 59 |
| | 24:1 (15Z)/24:1 (15Z)/24:1 (15Z)/14:1 (9Z) | 4.00 | 16.89 | 61 |
| **Sphingolipid Mix** | d17:1 | 5.00 | 1.08 | 4 |
| | d17:0 | 5.00 | 1.16 | 6 |
| | d18:1/12:0 SM | 5.00 | 3.49 | 11 |
| | d18:1/12:0 Cer | 5.00 | 4.72 | 15 |
| | d18:1/25:0 Cer | 5.00 | 14.49 | 45 |
| | d18:1/12:0 Glucosylceramide | 5.00 | 3.84 | 14 |
| | d18:1/12:0 Lactosylceramide | 5.00 | 3.56 | 12 |
| | d18:1/17:0 SM | 4.00 | 6.83 | 23 |
| **Cho** | Cho | 4.00 | 5.84 | 18 |
| **CE** | 17:0 | 4.00 | 16.33 | 60 |
| | 18:2 (TT) | 4.00 | 15.86 | 54 |
| | 18:1 | 4.00 | 16.16 | 56 |
| | 23:0 | 4.00 | 17.19 | 63 |

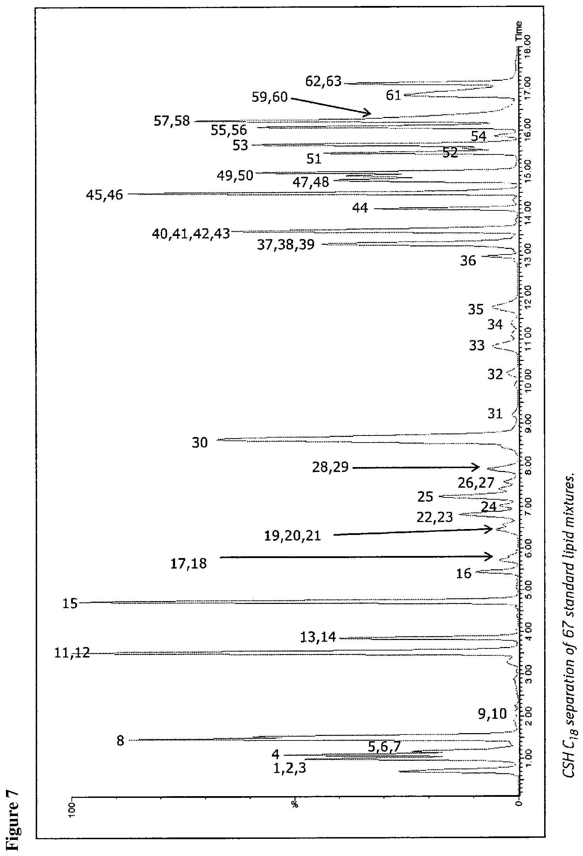

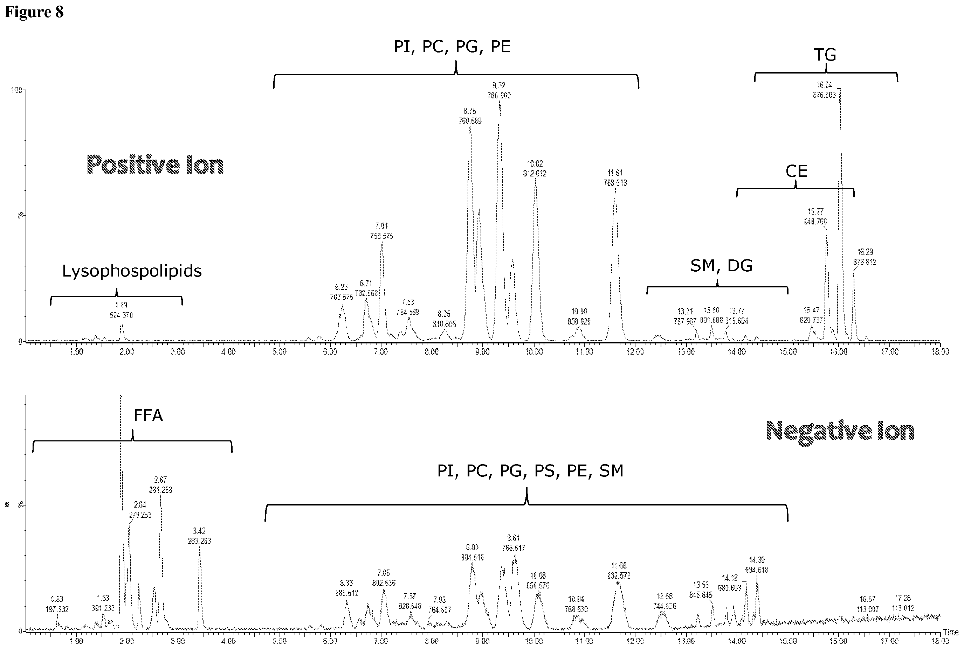

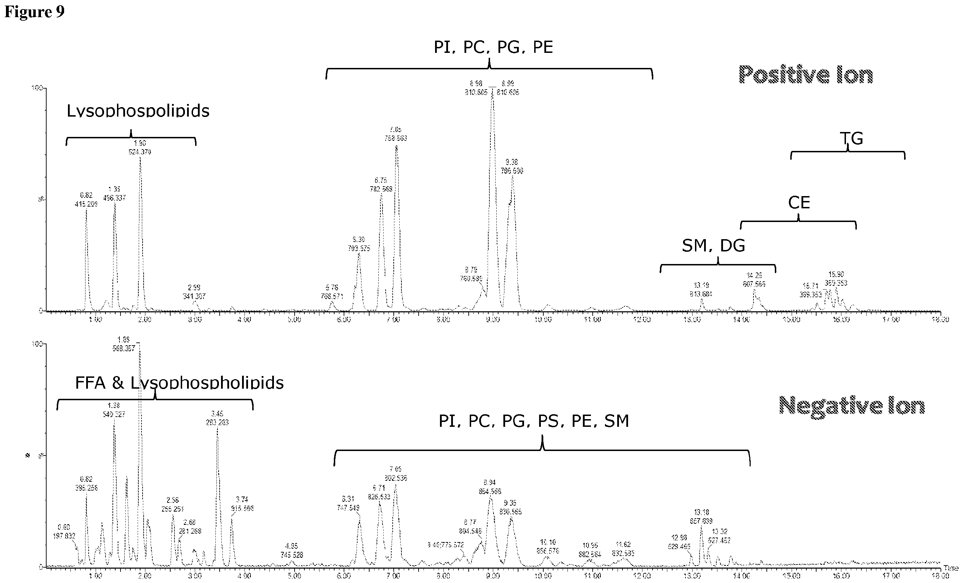

As can be seen in Figure 7, using the method of the invention results in enhances separations of lipid mixtures such as phosphatidylcholines which typically co-elute with sphingomyelins during RP separation. Figures 8 and 9 show the anaylsuis of total lipid extracts from bovine liver and rat plasma respectively.

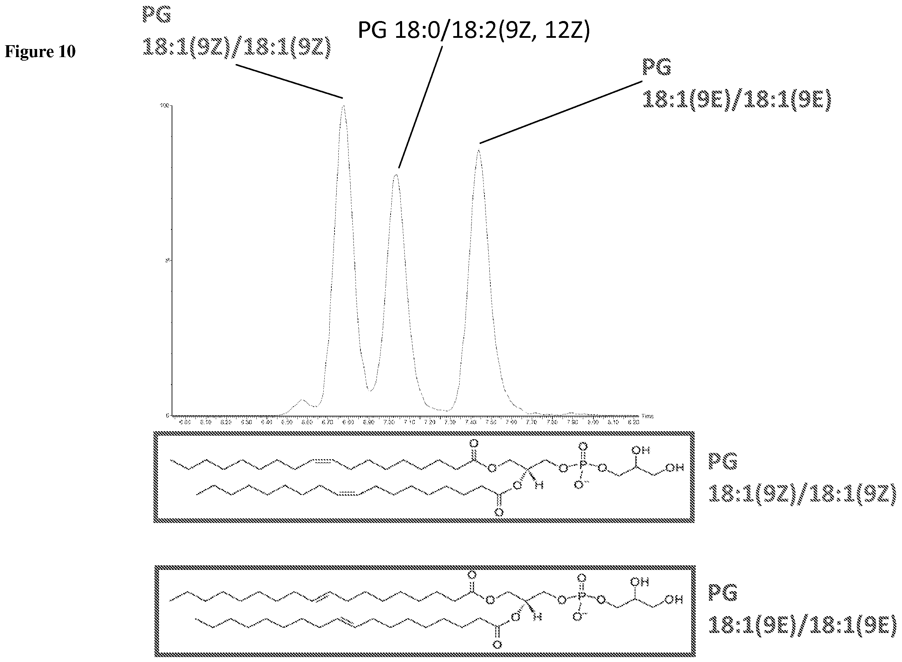

In this analysis the ability of UPLC and CSH Technology to differentiate between structural cis (Z) and trans (E) isomers was also observed. The separation of cis and trans isobaric phosphatidylglycerol (PG) species, such as PG 18:1(92)/18:1(9Z) and PG 18:1(9E)/18:1(9E) were easily separated. In addition, structural isomers such as PG 18:1(92)/18:1(9Z) versus PG 18:0/18:2(9Z, 12Z) were resolved, as shown in Figure 10. This information would typically not be available using an infusion or traditional HPLC methods.

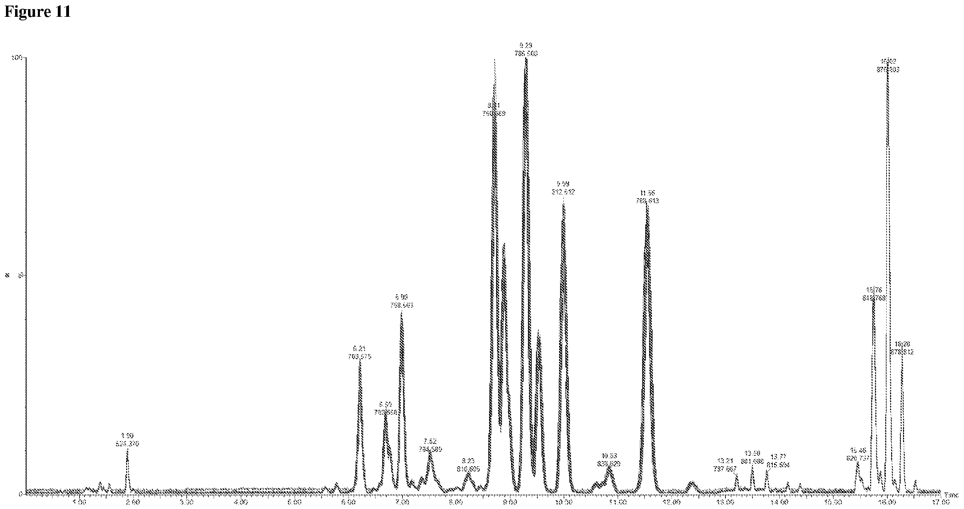

To test the applicability of this chromatographic method of the invention in real biological samples, total lipid extracts from bovine liver and rat plasma were analyzed. Using the system of the invention, the major lipid classes were separated with high resolution and sensitivity, which improved the detection of low abundant lipid species, as shown in Figures 8 and 8. Notably, the chromatographic method of the invention presented excellent retention time reproducibility from multiple injections of a bovine liver extract (%RSD < 0.136; n=20), as shown in Figure 11. This is especially useful for lipidomic analysis, which requires the comparison of a large number of LC/MS chromatograms deriving from multiple sample sets.

### Conclusion

The use of the methods of the invention provides clear improvements over other NP and RP traditional HPLC methods. It also marks an improvement over the UPLC methods for lipid analysis.

## Claims

1. A method of separating, analyzing, extracting, concentrating, or profiling one or more lipids comprised in a biological sample comprising a step of contacting said biological sample with a high purity chromatographic material comprising a chromatographic surface wherein the chromatographic surface comprises a hydrophobic surface group and one or more ionizable modifiers with the proviso that when the ionizable modifier does not contain a Zwitterion, the ionizable modifier does not contain a quaternary ammonium ion moiety, wherein the ionizable modifier of the high purity chromatographic material is obtained from an ionizable modifying reagent selected from groups having the formula (I) 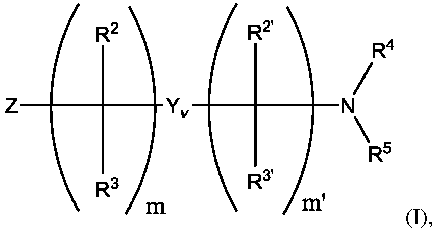 the formula (II): 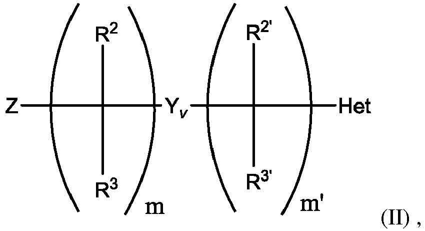 the formula (III): 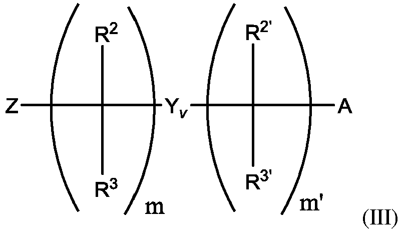 or a combination thereof
wherein
m is an integer from 1-8;
v is 0 or 1;
when v is 0, m' is 0;
when v is 1, m' is an integer from 1-8;
Z represents a chemically reactive group, including 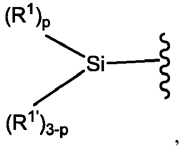 -OH, -OR⁶, amine, alkylamine, dialkylamine, isocyanate, acyl chloride, triflate, isocyanate, thiocyanate, imidazole carbonate, NHS-ester, carboxylic acid, ester, epoxide, alkyne, alkene, azide, -Br, -Cl, or -I;
Y is an embedded polar functionality;
each occurrence of R¹ independently represents a chemically reactive group on silicon, including (but not limited to) -H, -OH, -OR⁶, dialkylamine, triflate, Br, Cl, I, vinyl, alkene, or -(CH₂)_{m"}Q;
each occurrence of Q is -OH, -OR⁶, amine, alkylamine, dialkylamine, isocyanate, acyl chloride, triflate, isocyanate, thiocyanate, imidazole carbonate, NHS-ester, carboxylic acid, ester, epoxide, alkyne, alkene, azide, -Br, -Cl, or -I;
m" is an integer from 1-8
p is an integer from 1-3;
each occurrence of R^{1'} independently represents F, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl, fluoroalkyl, or fluoroaryl;
each occurrence of R², R^{2'}, R³ and R^{3'} independently represents hydrogen, C₁-C₁₈ alkyl, C₂-C₁₈ alkenyl, C₂-C₁₈ alkynyl, C₃-C₁₈ cycloalkyl, C₂-C₁₈ heterocycloalkyl, C₅-C₁₈ aryl, C₅-C₁₈ aryloxy, or C₄-C₁₈ heteroaryl, -Z, or a group having the formula -Si(R')_{b}R"ₐ or -C(R')_{b}R"ₐ;
a and b each represents an integer from 0 to 3 provided that a + b = 3;
R' represents a C₁ - C₆ straight, cyclic or branched alkyl group;
R" is a functionalizing group selected from the group consisting of alkyl, alkenyl, alkynyl, aryl, cyano, amino, diol, nitro, ester, a cation or anion exchange group, an alkyl or aryl group containing an embedded polar functionality and a chiral moiety.
R⁴ represents hydrogen, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl;
R⁵ represents hydrogen, C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl;
each occurrence of R⁶ independently represents C₁-C₁₈ alkyl, C₂-C₁₈ alkenyl, C₂-C₁₈ alkynyl, C₃-C₁₈ cycloalkyl, C₁-C₁₈ heterocycloalkyl, C₅-C₁₈ aryl, C₅-C₁₈ aryloxy, or C₁-C₁₈ heteroaryl;
Het represents a heterocyclic or heteroaryl ring system comprising at least one nitrogen atom; and
A represents an acidic ionizable modifier moiety or a dual charge ionizable modifier moiety.

2. The method of Claim 1, wherein said biological sample is contacted with a column chromatography device comprising
a) a column having a cylindrical interior for accepting a stationary phase; and
b) an immobilized stationary phase within said column, wherein said immobilized stationary phase comprises the high purity chromatographic material.

3. The method of Claim 1 or 2, wherein the high purity chromatographic material further comprises a chromatographic core material which preferably is a silica material, a hybrid inorganic/organic material, a superficially porous material, an inorganic material with a hybrid surface layer, a hybrid material with an inorganic surface layer, or a hybrid material with a different hybrid surface layer.

4. The method of Claim 1 or 2, wherein the ionizable modifier of the high purity chromatographic material contains a carboxylic acid group, a sulfonic acid group, an arylsulfonic group, a phosphoric acid group, a boronic acid group, an amino group, an imido group, an amido group, a pyridyl group, an imidazolyl group, an ureido group, a thionyl-ureido group or an aminosilane group.

5. The method of Claim 1 or 2, wherein the ionizable modifying reagent of the high purity chromatographic material is aminopropyltriethoxysilane, aminopropyltrimethoxysilane, 2-(2-(trichlorosilyl)ethyl)pyridine, 2-(2-(trimethoxy)ethyl)pyridine, 2-(2-(triethoxy)ethyl)pyridine, 2-(4-pyridylethyl)triethoxysilane, 2-(4-pyridylethyl)trimethoxysilane, 2-(4-pyridylethyl)trichlorosilane, chloropropyltrimethoxysilane, chloropropyltrichlorosilane, chloropropyltrichlorosilane, chloropropyltriethoxysilane, imidazolylpropyltrimethoxysilane, imidazolylpropyltriethoxysilane, imidazolylpropyl trichlorosilane, sulfopropyltrisilanol, carboxyethylsilanetriol, 2-(carbomethoxy)ethylmethyldichlorosilane, 2-(carbomethoxy)ethyltrichlorosilane, 2-(carbomethoxy)ethyltrimethoxysilane, n-(trimethoxysilylpropyl)ethylenediamine triacetic acid, (2-diethylphosphatoethyl)triethoxysilane, 3-mercaptopropyltriethoxysilane, 3-mercaptopropyltrimethoxysilane, bis[3-(triethoxysilyl)propyl]disulfide, bis[3-(triethoxysilyl)propyl]tetrasulfide, 2,2-dimethoxy-1-thia-2-silacyclopentane, bis(trichlorosilylethyl)phenylsulfonyl chloride, 2-(chlorosulfonylphenyl)ethyltrichlorosilane, 2-(chlorosulfonylphenyl)ethyltrimethoxysilane, 2-(ethoxysulfonylphenyl)ethyltrimethoxysilane, 2-(ethoxysulfonylphenyl)ethyltrimethoxysilane, 2-(ethoxysulfonylphenyl)ethyltrichlorosilane, sulphonic acid phenethyltrisilanol, (triethoxysilyl ethyl)phenyl phosphonic acid diethyl ester, (trimethoxysilyl ethyl)phenyl phosphonic acid diethyl ester, (trichlorosilyl ethyl)phenyl phosphonic acid diethyl ester, phosphonic acid phenethyltrisilanol, N-(3-trimethoxysilylpropyl)pyrrole, N-(3-triethoxysilylpropyl)-4,5-dihydroimidazole, bis(methyldimethoxysilylpropyl)-N-methylamine, tris(triethoxysilylpropyl)amine, bis(3-trimethoxysilylpropyl)-N-methylamine, (N,N-diethyl-3-aminopropyl)trimethoxysilane, N-(hydroxyethyl)-N-methylaminopropyltrimethoxysilane, 3-(N,N-dimethylaminopropyl)trimethoxysilane, bis(2-hydroxyethyl)-3-aminopropyltriethoxysilane, N,N'-bis(hydroxyethyl)-N,N'-bis(trimethoxysilylpropyl)ethylenediamine, or N,N-dimethyl-3-aminopropylmethyldimethoxysilane.

6. The method of Claim 1 or 2, wherein ratio of the hydrophobic surface group :
ionizable modifier in the high purity chromatographic material is from about 2.5:1 to about 350:1.

7. The method of Claim 1 or 2, wherein the concentration of ionizable modifier in the high purity chromatographic material is less than about 0.5 µmol/m², preferably from about 0.01 µmol/m² to about 0.5 µmol/m².

8. The method of Claim 1 or 2, wherein the hydrophobic surface group of the high purity chromatographic material is a C4 to C30 bonded phase, such as a C18 bonded phase, an aromatic, a phenylalkyl, a fluoro-aromatic, a phenylhexyl, a pentafluorophenylalkyl, a chiral bonded phase, or an embedded polar bonded phase.

9. The method of Claim 1 or 2, wherein the high purity chromatographic material is in the form of a particle, a monolith, or a superficially porous material.

10. The method of Claim 1 or 2, wherein the high purity chromatographic material has (i) a surface area of about 25 to 1100 m²/g; (ii) a pore volume of about 0.15 to 1.7 cm³/g; (iii) a micropore surface area of less than about 110 m²/g; (iv) an average pore diameter of about 20 to 1500Å.

11. The method of Claim 1 or 2, wherein the high purity chromatographic material has been surface modified.

12. The method of Claim 1 or 2, wherein the biological sample (i) comprises one or more biological molecules; or (ii) is an inclusion body, a biological fluid, a biological tissue, a plant tissue, a biological matrix, an embedded tissue sample, one or more cells or a cell culture supernatant.

13. The method of Claim 1 or 2, further comprising the step of identifying the components of the biological sample.

14. The method of Claim 13, wherein the identification of the components is achieved by mass spectrometry, MALDI-MS, ESI-MS, nuclear magnetic resonance, infrared analysis, flow injection analysis, capillary electrochromatography, ultraviolet detection or a combination thereof, preferably by comparison of mass spectrometry peaks with known compounds in a computer database.

## Patentansprüche

1. Verfahren zum Trennen, Analysieren, Extrahieren, Konzentrieren oder Profilieren von einem oder mehreren Lipiden, die von einer biologischen Probe umfasst werden, umfassend einen Schritt eines Inkontaktbringens der biologischen Probe mit einem hochreinen Chromatographiematerial, umfassend eine chromatographische Oberfläche, wobei die chromatographische Oberfläche eine hydrophobe Oberflächengruppe und einen oder mehrere ionisierbare Modifikatoren umfasst, mit der Maßgabe, dass, wenn der ionisierbare Modifikator kein Zwitterion enthält, der ionisierbare Modifikator keine quartäre Ammoniumioneneinheit enthält, wobei der ionisierbare Modifikator des hochreinen Chromatographiematerials aus einem ionisierbaren Modifikationsreagens erhalten wird, ausgewählt aus Gruppen mit der Formel (I): 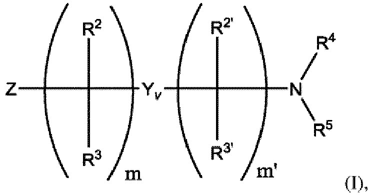 der Formel (II): 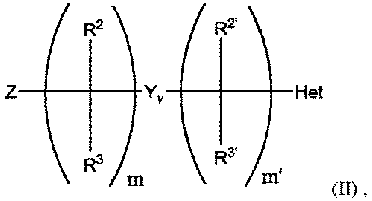 der Formel (III): 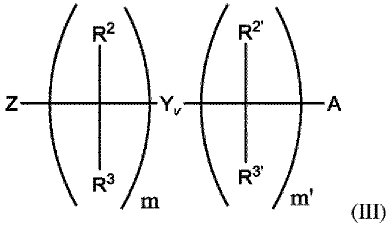 oder einer Kombination davon,
wobei
m eine ganze Zahl von 1-8 ist;
v 0 oder 1 ist;
wenn v 0 ist, m' 0 ist;
wenn v 1 ist, m' eine ganze Zahl von 1-8 ist;
Z für eine chemisch reaktive Gruppe steht, einschließlich 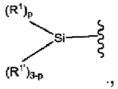 -OH, -OR⁶, Amin, Alkylamin, Dialkylamin, Isocyanat, Acylchlorid, Triflat, Isocyanat, Thiocyanat, Imidazolcarbonat, NHS-Ester, Carbonsäure, Ester, Epoxid, Alkin, Alken, Azid, -Br, -Cl oder -I;
Y eine eingebettete polare Funktionalität ist;
jedes Auftreten von R¹ unabhängig für eine chemisch reaktive Gruppe an Silicum steht, einschließlich (jedoch nicht darauf beschränkt) -H, -OH, -OR⁶, Dialkylamin, Triflat, Br, Cl, I, Vinyl, Alken oder -(CH₂)_{m"}Q;
jedes Auftreten von Q -OH, -OR⁶, Amin, Alkylamin, Dialkylamin, Isocyanat, Acylchlorid, Triflat, Isocyanat, Thiocyanat, Imidazolcarbonat, NHS-Ester, Carbonsäure, Ester, Epoxid, Alkin, Alken, Azid, -Br, -Cl oder -I ist;
m" eine ganze Zahl von 1-8 ist;
p eine ganze Zahl von 1-3 ist;
jedes Auftreten von R¹ unabhängig für F, C₁-C₁₈-Alkyl, C₂-C₁₈-Alkenyl, C₂-C₁₈-Alkinyl, C₃-C₁₈-Cycloalkyl, C₁-C₁₈-Heterocycloalkyl, C₅-C₁₈-Aryl, C₅-C₁₈-Aryloxy oder C₁-C₁₈-Heteroaryl, Fluoralkyl oder Fluoraryl steht;
jedes Auftreten von R², R^{2'}, R³ und R^{3'} unabhängig für Wasserstoff, C₁-C₁₈-Alkyl, C₂-C₁₈-Alkenyl, C₂-C₁₈-Alkinyl, C₃-C₁₈-Cycloalkyl, C₂-C₁₈-Heterocycloalkyl, C₅-C₁₈-Aryl, C₅-C₁₈-Aryloxy oder C₄-C₁₈-Heteroaryl, -Z oder eine Gruppe mit der Formel -Si(R')_{b}R"ₐ oder - C(R')_{b}R"ₐ steht;
a und b jeweils für eine ganze Zahl von 0 bis 3 stehen, vorausgesetzt, dass a + b = 3;
R' für eine gerade, cyclische oder verzweigte C₁-C₆-Alkylgruppe steht;
R" eine funktionalisierende Gruppe ist, ausgewählt aus der Gruppe bestehend aus Alkyl, Alkenyl, Alkinyl, Aryl, Cyano, Amino, Diol, Nitro, Ester, einer Kationen- oder Anionenaustauschgruppe, einer Alkyl- oder Arylgruppe, die eine eingebettete polare Funktionalität und eine chirale Einheit enthält;
R⁴ für Wasserstoff, C₁-C₁₈-Alkyl, C₂-C₁₈-Alkenyl, C₂-C₁₈-Alkinyl, C₃-C₁₈-Cycloalkyl, C₁-C₁₈-Heterocycloalkyl, C₅-C₁₈-Aryl, C₅-C₁₈-Aryloxy oder C₁-C₁₈-Heteroaryl steht;
R⁵ für Wasserstoff, C₁-C₁₈-Alkyl, C₂-C₁₈-Alkenyl, C₂-C₁₈-Alkinyl, C₃-C₁₈-Cycloalkyl, C₁-C₁₈-Heterocycloalkyl, C₅-C₁₈-Aryl, C₅-C₁₈-Aryloxy oder C₁-C₁₈-Heteroaryl steht;
jedes Auftreten von R⁶ unabhängig für C₁-C₁₈-Alkyl, C₂-C₁₈-Alkenyl, C₂-C₁₈-Alkinyl, C₃-C₁₈-Cycloalkyl, C₁-C₁₈-Heterocycloalkyl, C₅-C₁₈-Aryl, C₅-C₁₈-Aryloxy oder C₁-C₁₈-Heteroaryl steht;
Het für ein heterocyclisches oder Heteroaryl-Ringsystem steht, das mindestens ein Stickstoffatom umfasst; und
A für eine saure ionisierbare Modifikatoreinheit oder eine ionisierbare Doppelladungsmodifikatoreinheit steht.

2. Verfahren nach Anspruch 1, wobei die biologische Probe mit einer Säulenchromatographievorrichtung in Kontakt gebracht wird, umfassend
a) eine Säule mit einem zylindrischen Innenraum zum Aufnehmen einer stationären Phase und
b) eine immobilisierte stationäre Phase innerhalb der Säule, wobei die immobilisierte stationäre Phase das hochreine Chromatographiematerial umfasst.

3. Verfahren nach Anspruch 1 oder 2, wobei das hochreine Chromatographiematerial weiterhin ein Chromatographiekernmaterial umfasst, das vorzugsweise ein Siliciumdioxidmaterial, ein anorganisches/organisches Hybridmaterial, ein oberflächlich poröses Material, ein anorganisches Material mit einer Hybrid-Oberflächenschicht, ein Hybridmaterial mit einer anorganischen Oberflächenschicht oder ein Hybridmaterial mit einer anderen Hybrid-Oberflächenschicht ist.

4. Verfahren nach Anspruch 1 oder 2, wobei der ionisierbare Modifikator des hochreinen Chromatographiematerials eine Carbonsäuregruppe, eine Sulfonsäuregruppe, eine Arylsulfonsäuregruppe, eine Phosphorsäuregruppe, eine Borsäuregruppe, eine Aminogruppe, eine Imidogruppe, eine Amidogruppe, eine Pyridylgruppe, eine Imidazolylgruppe, eine Ureidogruppe, eine Thionylureidogruppe oder eine Aminosilangruppe enthält.

5. Verfahren nach Anspruch 1 oder 2, wobei das ionisierbare Modifikationsreagens des hochreinen Chromatographiematerials Aminopropyltriethoxysilan, Aminopropyltrimethoxysilan, 2-(2-(Trichlorsilyl)ethyl)pyridin, 2-(2-(Trimethoxy)ethyl)pyridin, 2-(2-(Triethoxy)ethyl)pyridin, 2-(4-Pyridylethyl)triethoxysilan, 2-(4-Pyridylethyl)trimethoxysilan, 2-(4-Pyridylethyl)trichlorsilan, Chlorpropyltrimethoxysilan, Chlorpropyltrichlorsilan, Chlorpropyltrichlorsilan, Chlorpropyltriethoxysilan, Imidazolylpropyltrimethoxysilan, Imidazolylpropyltriethoxysilan, Imidazolylpropyltrichlorsilan, Sulfopropyltrisilanol, Carboxyethylsilantriol, 2-(Carbomethoxy)ethylmethyldichlorosilan, 2-(Carbomethoxy)ethyltrichlorsilan, 2-(Carbomethoxy)ethyltrimethoxysilan, n-(Trimethoxysilylpropyl)ethylendiamintriessigsäure, (2-Diethylphosphatoethyl)triethoxysilan, 3-Mercaptopropyltriethoxysilan, 3-Mercaptopropyltrimethoxysilan, Bis-[3-(triethoxysilyl)propyl]disulfid, Bis-[3-(triethoxysilyl)propyl]tetrasulfid, 2,2-Dimethoxy-1-thia-2-silacyclopentan, Bis(trichlorsilylethyl)phenylsulfonylchlorid, 2-(Chlorsulfonylphenyl)ethyltrichlorsilan, 2-(Chlorsulfonylphenyl)ethyltrimethoxysilan, 2-(Ethoxysulfonylphenyl)ethyltrimethoxysilan, 2-(Ethoxysulfonylphenyl)ethyltrimethoxysilan, 2-(Ethoxysulfonylphenyl)ethyltrichlorsilan, Sulfonsäurephenethyltrisilanol, (Triethoxysilylethyl)phenylphosphonsäurediethylester, (Trimethoxysilylethyl)phenylphosphonsäurediethylester, (Trichlorsilylethyl)phenylphosphonsäurediethylester, Phosphonsäurephenethyltrisilanol, N-(3-Trimethoxysilylpropyl)pyrrol, N-(3-Triethoxysilylpropyl)-4,5-dihydroimidazol, Bis(methyldimethoxysilylpropyl)-N-methylamin, Tris(triethoxysilylpropyl)amin, Bis-(3-trimethoxysilylpropyl)-N-methylamin, (N,N-Diethyl-3-aminopropyl)trimethoxysilan, N-(Hydroxyethyl)-N-methylaminopropyltrimethoxysilan, 3-(N,N-Dimethylaminopropyl)trimethoxysilan, Bis-(2-hydroxyethyl)-3-aminopropyltriethoxysilan, N,N'-Bis(hydroxyethyl)-N,N'-bis(trimethoxysilylpropyl)ethylendiamin oder N,N-Dimethyl-3-aminopropylmethyldimethoxysilan ist.

6. Verfahren nach Anspruch 1 oder 2, wobei ein Verhältnis der hydrophoben Oberflächengruppe:dem ionisierbaren Modifikator in dem hochreinen Chromatographiematerial von etwa 2,5:1 bis etwa 350:1 beträgt.

7. Verfahren nach Anspruch 1 oder 2, wobei die Konzentration an ionisierbarem Modifikator in dem hochreinen Chromatographiematerial niedriger als etwa 0,5 µmol/m² ist, vorzugsweise von etwa 0,01 µmol/m² bis etwa 0,5 µmol/m² beträgt.

8. Verfahren nach Anspruch 1 oder 2, wobei die hydrophobe Oberflächengruppe des hochreinen Chromatographiematerials eine C4- bis C30-gebundene Phase, wie eine C18-gebundene Phase, ein Aromat, ein Phenylalkyl, ein Fluoraromat, ein Phenylhexyl, ein Pentafluorphenylalkyl, eine chirale gebundene Phase oder eine eingebettete polare gebundene Phase ist.

9. Verfahren nach Anspruch 1 oder 2, wobei das hochreine Chromatographiematerial in der Form eines Partikels, eines Monolithen oder eines oberflächlich porösen Materials ist.

10. Verfahren nach Anspruch 1 oder 2, wobei das hochreine Chromatographiematerial (i) einen Oberflächenbereich von etwa 25 bis 1100 m²/g; (ii) ein Porenvolumen von etwa 0,15 bis 1,7 cm³/g; (iii) einen Mikroporenoberflächenbereich von weniger als etwa 110 m²/g; (iv) einen durchschnittlichen Porendurchmesser von etwa 20 bis 1500 Å aufweist.

11. Verfahren nach Anspruch 1 oder 2, wobei das hochreine Chromatographiematerial oberflächenmodifiziert wurde.

12. Verfahren nach Anspruch 1 oder 2, wobei die biologische Probe (i) ein oder mehrere biologische Moleküle umfasst oder (ii) ein Einschlusskörper, ein biologisches Fluid, ein biologisches Gewebe, ein Pflanzengewebe, eine biologische Matrix, eine eingebettete Gewebeprobe, ein oder mehrere Zellen oder ein Zellkulturüberstand ist.

13. Verfahren nach Anspruch 1 oder 2, weiterhin umfassend den Schritt eines Identifizierens der Komponenten der biologischen Probe.

14. Verfahren nach Anspruch 13, wobei die Identifikation der Komponenten durch Massenspektrometrie, MALDI-MS, ESI-MS, Kernspinresonanz, Infrarot-Analyse, Fließinjektionsanalyse, Kapillarelektrochromatographie, Ultraviolett-Erkennung oder eine Kombination davon, vorzugsweise durch Vergleich von Massenspektrometrie-Peaks mit bekannten Verbindungen in einer Computerdatenbank erzielt wird.

## Revendications

1. Procédé de séparation, d'analyse, d'extraction, de concentration ou de profilage d'un ou de plusieurs lipides compris dans un échantillon biologique comprenant une étape de mise en contact dudit échantillon biologique avec un matériau chromatographique de grande pureté comprenant une surface chromatographique, la surface chromatographique comprenant un groupe de surface hydrophobe et un ou plusieurs modificateurs ionisables à condition que lorsque le modificateur ionisable ne contient pas de Zwitterion, ledit modificateur ionisable ne contient pas de fraction d'ion ammonium quaternaire, le modificateur ionisable du matériau chromatographique de grande pureté étant obtenu à partir d'un réactif modificateur ionisable sélectionné parmi les groupes ayant la formule (I) 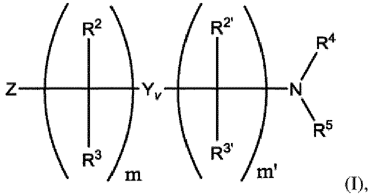 la formule (II) : 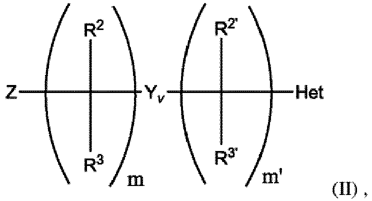 la formula (III) : 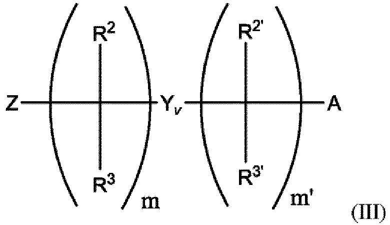 ou une combinaison de celles-ci
dans lesquelles
m désigne un nombre entier valant de 1 à 8 ;
v vaut 0 ou 1 ;
lorsque v vaut 0, m' vaut 0 ;
lorsque v vaut 1, m' désigne un nombre entier valant de 1 à 8 ; Z représente un groupe chimique réactif, contenant 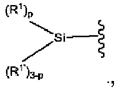 -OH, -OR⁶, amine, alkylamine, dialkylamine, isocyanate, chlorure d'acyle, trifiate, isocyanate, thiocyanate, carbonate d'imidazole, ester de NHS, acide carboxylique, ester, époxyde, alcyne, alcène, azide, -Br, -Cl ou -I ;
Y représente une fonctionnalité polaire intégrée ;
chaque occurrence de R¹ représente indépendamment un groupe chimiquement réactif sur le silicium, y compris (mais non limité à) -H, -OH, -OR⁶, dialkylamine, triflate, Br, Cl, I, vinyle, alcène, ou -(CH₂)_{m"}Q ;
chaque occurrence de Q représente -OH, -OR⁶, amine, alkylamine, dialkylamine, isocyanate, chlorure d'acyle, triflate, isocyanate, thiocyanate, carbonate d'imidazole, ester de NHS, acide carboxylique, ester, époxyde, alcyne, alcène, azide, -Br, -Cl, ou -I ;
m" désigne un nombre entier compris entre 1 et 8
p désigne un nombre entier compris entre 1 et 3 ;
chaque occurrence de R¹ représente indépendamment F, un groupe alkyle en C₁ à C₁₈, un alcényle en C₂ à C₁₈, un alcynyle en C₂ à C₁₈, un cycloalkyle en C₃ à C₁₈, un hétérocycloalkyle en C₁ à C₁₈, un aryle en C₅ à C₁₈, un aryloxy en C₅ à C₁₈ ou un hétéroaryle en C₁ à C₁₈, un fluoroalkyle ou un fluoroaryle ;
chaque occurrence de R², R^{2'}, R³ et R^{3'} représente indépendamment un atome d'hydrogène, un groupe alkyle en C₁ à C₁₈, un alcényle en C₂ à C₁₈, un alcynyle en C₂ à C₁₈, un cycloalkyle en C₃ à C₁₈, un hétérocycloalkyle en C₂ à C₁₈, aryle en C₅ à C₁₈, un aryloxy en C₅ à C₁₈ ou un hétéroaryle en C₄ à C₁₈, -Z, ou un groupe ayant la formule - Si(R')_{b}R "ₐ ou -C(R')_{b}R "ₐ ;
a et b représentent chacun un nombre entier valant de 0 à 3, à condition que a + b = 3 ;
R' représente un groupe alkyle en C₁ à C₆ linéaire, cyclique ou ramifié ;
R" représente un groupe de fonctionnalisation sélectionné dans le groupe constitué d'un alkyle, alcényle, alcynyle, aryle, cyano, amino, diol, nitro, ester, d'un groupe échangeur de cations ou d'anions, d'un groupe alkyle ou aryle contenant une fonctionnalité polaire intégrée et une fraction chirale.
R⁴ représente l'hydrogène, un alkyle en C₁ à C₁₈, un alcényle en C₂ à C₁₈, un alcynyle en C₂ à C₁₈, un cycloalkyle en C₃ à C₁₈, un hétérocycloalkyle en C₁ à C₁₈, un aryle en C₅ à C₁₈, un aryloxy en C₅ à C₁₈ ou un hétéroaryle en C₁-C₁₈ ;
R⁵ représente l'hydrogène, un alkyle en C₁ à C₁₈, un alcényle en C₂ à C₁₈, un alcynyle en C₂ à C₁₈, un cycloalkyle en C₃ à C₁₈, un hétérocycloalkyle en C₁ à C₁₈, un aryle en C₅ à C₁₈, un aryloxy en C₅ à C₁₈ ou un hétéroaryle en C₁ à C₁₈ ;
chaque occurrence de R⁶ représente indépendamment un alkyle en C₁ à C₁₈, un alcényle en C₂ à C₁₈, un alcynyle en C₂ à C₁₈, un cycloalkyle en C₃ à C₁8, un hétérocycloalkyle en C₁ à C₁₈, un aryle en C₅ à C₁₈, un aryloxy en C₅ à C₁₈ ou un hétéroaryle en C₁ à C₁₈ ;
Het représente un système cyclique hétérocyclique ou hétéroaryle comprenant au moins un atome d'azote ; et
A représente un fragment modificateur ionisable acide ou un fragment modificateur ionisable à double charge.

2. Procédé selon la revendication 1, ledit échantillon biologique étant mis en contact avec un dispositif de chromatographie sur colonne comprenant
a) une colonne ayant un intérieur cylindrique pour accepter une phase stationnaire ; et
b) une phase stationnaire immobilisée à l'intérieur de ladite colonne, ladite phase stationnaire immobilisée comprenant le matériau chromatographique de grande pureté.

3. Procédé selon la revendication 1 ou 2, dans lequel le matériau chromatographique de grande pureté comprend en outre un matériau de noyau chromatographique qui est de préférence un matériau de silice, un matériau hybride inorganique/organique, un matériau superficiellement poreux, un matériau inorganique avec une couche de surface hybride, un matériau hybride avec une couche de surface inorganique ou un matériau hybride avec une couche de surface hybride différente.

4. Procédé selon la revendication 1 ou 2, dans lequel le modificateur ionisable du matériau chromatographique de grande pureté contient un groupe acide carboxylique, un groupe acide sulfonique, un groupe arylsulfonique, un groupe acide phosphorique, un groupe acide boronique, un groupe amino, un groupe imido, un groupe amido, un groupe pyridyle, un groupe imidazolyle, un groupe uréido, un groupe thionyle-uréido ou un groupe aminosilane.

5. Procédé selon la revendication 1 ou 2, dans lequel le réactif modificateur ionisable du matériau chromatographique de grande pureté est l'aminopropyltriéthoxysilane, l'aminopropyltriméthoxysilane, la 2-(2-(trichlorosilyl)éthyl)pyridine, la 2-(2-(triméthoxy)éthyl)pyridine, la 2-(2-(triéthoxy)éthyl)pyridine, le 2-(4-pyridyléthyl)triéthoxysilane, le 2-(4-pyridyléthyl)triméthoxysilane, le 2-(4-pyridyléthyl)trichlorosilane, le chloropropyltriméthoxysilane, le chloropropyltrichlorosilane, le chloropropyltrichlorosilane, le chloropropyltriéthoxysilane, l'imidazolylpropyltriméthoxysilane, l'imidazolylpropyltriéthoxysilane, l'imidazolylpropyltrichlorosilane, le sulfopropyltrisilanol, le carboxyéthylsilanetriol, le 2-(carbométhoxy)éthylméthyldichlorosilane, le 2-(carbométhoxy)éthyltrichlorosilane, le 2-(carbométhoxy)éthyltriméthoxysilane, l'acide n-(triméthoxysilylpropyl)éthylènediamine triacétique, le (2-diéthylphosphatoéthyl)triéthoxysilane, le 3-mercaptopropyltriéthoxysilane, le 3- mercaptopropyltriméthoxysilane, le bis[3-(triéthoxysilyl)propyl]disulfure, bis[3-(triéthoxysilyl)propyl]tétrasulfure, le 2,2- diméthoxy-1 - thia-2-silacyclopentane, le chlorure de bis(trichlorosilyléthyl)phénylsulfonyle, le 2-(chlorosulfonylphényl)éthyltrichlorosilane, le 2-(chlorosulfonylphényl)éthyltriméthoxysilane, le 2-(éthoxysulfonylphényl)éthyltriméthoxysilane, le 2-(éthoxysulfonylphényl)éthyltriméthoxysilane, le 2-(éthoxysulfonylphényl)éthyltrichlorosilane, le phénéthyltrisilanol de l'acide sulfonique, l'ester diéthylique de l'acide (triéthoxysilyléthyl)phénylphosphonique, l'ester diéthylique de l'acide (triméthoxysilyléthyl)phénylphosphonique, l'ester diéthylique de l'acide (trichlorosilyléthyl)phénylphosphonique, le phénéthyltrisilanol de l'acide phosphonique, le N-(3- triméthoxysilylpropyl)pyrrole, le N-(3-triéthoxysilylpropyl)-4,5-dihydroimidazole, le bis(méthyldiméthoxysilylpropyl)-N-méthylamine, le tris(triéthoxysilylpropyl)amine, le bis(3-triméthoxysilylpropyl)-N-méthylamine, le (N,N-diéthyl-3- aminopropyl)triméthoxysilane, le N-(hydroxyéthyl)-N-méthylaminopropyltriméthoxysilane, le 3-(N,N-diméthylaminopropyl)triméthoxysilane, le bis(2-hydroxyéthyl)-3-aminopropyltriéthoxysilane, le N,N'-bis(hydroxyéthyl)-N,N'-bis(triméthoxysilylpropyl)éthylènediamine ou le N,N-diméthyl-3-aminopropylméthyldiméthoxysilane.

6. Procédé selon la revendication 1 ou 2, dans lequel le rapport du groupe de surface hydrophobe au modificateur ionisable dans le matériau chromatographique de grande pureté est d'environ 2,5 : 1 à environ 350 : 1.

7. Procédé selon la revendication 1 ou 2, dans lequel la concentration de modificateur ionisable dans le matériau chromatographique de grande pureté est inférieure à environ 0,5 µmol/m², de préférence comprise entre environ 0,01 µmol/m² et environ 0,5 µmol/m².

8. Procédé selon la revendication 1 ou 2, dans lequel le groupe de surface hydrophobe du matériau chromatographique de grande pureté est une phase liée en C4 à C30, telle qu'une phase liée en Cl8, une phase aromatique, phénylalkyle, fluoro-aromatique, phénylhexyle, pentafluorophénylalkyle, une phase liée chirale ou une phase liée polaire incorporée.

9. Procédé selon la revendication 1 ou 2, dans lequel le matériau chromatographique de grande pureté se présente sous la forme d'une particule, d'un monolithe ou d'un matériau superficiellement poreux.

10. Procédé selon la revendication 1 ou 2, dans lequel le matériau chromatographique de grande pureté a (i) une surface spécifique d'environ 25 à 1100 m²/g ; (ii) un volume de pores d'environ 0,15 à 1,7 cm³/g ; (iii) une surface spécifique de micropores inférieure à environ 110 m²/g ; (iv) un diamètre moyen de pores d'environ 20 à 1500 Å.

11. Procédé selon la revendication 1 ou 2, dans lequel le matériau chromatographique de grande pureté a été modifié en surface.

12. Procédé selon la revendication 1 ou 2, dans lequel l'échantillon biologique (i) comprend une ou plusieurs molécules biologiques ; ou (ii) est un corps d'inclusion, un fluide biologique, un tissu biologique, un tissu végétal, une matrice biologique, un échantillon de tissu incorporé, une ou plusieurs cellules ou un surnageant de culture cellulaire.

13. Procédé selon la revendication 1 ou 2, comprenant en outre l'étape consistant à identifier les composants de l'échantillon biologique.

14. Procédé selon la revendication 13, dans lequel l'identification des composants est réalisée par spectrométrie de masse, désorption laser assistée par matrice/spectrométrie de masse par ionisation (MALDI-MS), spectrométrie de masse par pulvérisation d'électrons (ESI-MS), résonance magnétique nucléaire, analyse infrarouge, analyse par injection de flux, électrochromatographie capillaire, détection ultraviolette ou une combinaison de ces méthodes, de préférence par comparaison des pics de spectrométrie de masse avec des composés connus dans une base de données informatique.
